# EUROPÄISCHE PATENTSCHRIFT

(11) **EP 2 939 768 B1**
(45) Veröffentlichungstag und Bekanntmachung des Hinweises auf die Patenterteilung: **04.10.2017**
(21) Anmeldenummer: 15165079.3
(22) Anmeldetag: 24.04.2015
(51) Int. Cl.: B23B 13/02, B23B 13/10, B23Q 7/00, B23Q 7/08

(54) **MATERIALSTANGENLADEMAGAZIN**
BAR FEEDER WITH MAGAZINE
EMBARREUR AVEC MAGASIN

(30) Priorität: 28.04.2014 DE 102014105919
(43) Veröffentlichungstag der Anmeldung: 04.11.2015
(73) Patentinhaber: Index-Werke GmbH & Co. KG Hahn & Tessky, 73730 Esslingen (DE)
(72) Erfinder: Handel, Christoph, 72555 Metzingen (DE); Baumann, Ulrich, 73252 Lenningen (DE); Merkel, Roland, 73732 Esslingen (DE); Kuzak, Matthias, 73119 Zell unter Aichelberg (DE); Beck, Eberhard, 73773 Aichwald (DE); Margraf, Evelyn, 73037 Göppingen (DE)
(74) Vertreter: Hoeger, Stellrecht & Partner Patentanwälte mbB

(56) Entgegenhaltungen:
- WO-A1-2013/055768
- WO-A2-2012/099323
- DE-A1- 1 477 459
- DE-A1- 3 024 766
- DE-A1-102010 002 781
- DE-A1-102011 015 578
- DE-T2- 68 908 654
- HERZOG H D: "STANGENNACHSCHUBSYSTEME FUR PRODUKTIONSDREHMASCHINEN", VDI Z, SPRINGER VDI VERLAG, DE, Bd. 132, Nr. 8, 1. August 1990 (1990-08-01), Seiten 56-59, XP000147612, ISSN: 0042-1766
- "Catalogue - INDEX bar loading magazine MBL/MBF", , 15. Oktober 2007 (2007-10-15), XP002747926, Gefunden im Internet: URL:https://web.archive.org/web/2007101509 2627/http://www.index-werke.de/mediadata/m bl-0011e.pdf [gefunden am 2015-10-20]

## Beschreibung

Die Erfindung betrifft ein Materialstangenlademagazin für Werkzeugmaschinen gemäß dem Oberbegriff des Anspruchs 1. Ein solches Materialstangenlademagazin ist in der DE68908654T2 offenbart. Bei derartigen Materialstangenmagazinen besteht das Problem, einerseits die Materialstange sicher und zuverlässig in der Zufuhrposition zu führen und andererseits in möglichst einfacher Art und Weise weitere Materialstangen in die Zufuhrposition bringen zu können.

Diese Aufgabe wird bei einem Materialstangenlademagazin der eingangs beschriebenen Art erfindungsgemäß dadurch gelöst, dass der Satz von Materialstangenführungselementen und das Materialstangenvorschubelement in eine Materialstangenbeladestellung verfahrbar sind, in welcher die Materialstange in eine zur Ausrichtachse koaxiale Einführausgangsposition bringbar ist, von welcher ausgehend die Materialstange in die Lageraufnahmen des Satzes der Materialstangenführungselemente einführbar ist.

Der Vorteil der erfindungsgemäßen Lösung ist darin zu sehen, dass damit in einfacher Weise ein Verbringen der Materialstange in die Einführausgangsposition und von dieser dann in die Zufuhrposition möglich ist.

Besonders günstig ist es dabei, wenn in der mindestens einen Materialstangenbeladestellung die in der Einführausgangsposition angeordnete Materialstange zwischen dem Satz von Materialstangenführungselementen und dem Materialstangenvorschubelement angeordnet ist.

Diese Ausführungsform hat den Vorteil, dass damit in einfacher Weise die Materialstange von der Einführausgangsposition mittels des Materialstangenvorschubelements in die Lageraufnahmen der Materialstangenführungselemente einführbar ist, wobei dies insbesondere nur eine Bewegung in Richtung der Ausrichtachse erfordert.

Bei dem erfindungsgemäßen Materialstangenlademagazin wäre es prinzipiell möglich, eine weitere Materialstange dadurch zuzuführen, dass diese sich aufgrund der Wirkung der Schwerkraft in die Einführausgangsposition bewegt.

Dies hätte jedoch eine ergonomisch ungünstige Handhabung der weiteren Materialstange zur Folge, insbesondere müsste die weitere Materialstange dadurch sehr hoch angehoben werden.

Aus diesem Grund sieht eine vorteilhafte Lösung vor, dass eine Zufuhr einer weiteren Materialstange durch ein Anheben derselben mit einer Bewegungskomponente entgegen der Schwerkraft bis zum Erreichen der Einführausgangsposition erfolgt.

Eine derartige Zufuhr der Materialstange hat nicht nur hinsichtlich der Handhabung der Materialstangen Vorteile, sondern auch Vorteile dahingehend, dass damit in einfacher Weise eine derartige Zufuhr durch eine Bedienungsperson entweder unterstützt und/oder überwacht werden kann.

Besonders günstig ist es dabei, wenn die weitere Materialstange beim Anheben zum Erreichen der Einführausgangsposition längs ihrer im Wesentlichen vertikal verlaufenden Hebebahn bewegbar ist.

Dabei ist unter einer im Wesentlichen vertikal verlaufenden Hebebahn zu verstehen, dass diese Hebebahn mit der Vertikalen maximal einen Winkel von 30° einschließt, so dass die Bewegung der weiteren Materialstange längs der Hebebahn durch eine Bewegungskomponente in Richtung der vertikalen dominiert ist.

Diese Lösung hat außerdem den Vorteil, dass damit für eine Bedienungsperson in einfacher Weise eine Beobachtung der Vorgänge von einem auf einer Seite der Hebebahn liegenden Zugangsbereich möglich ist, ohne dass der Zugangsbereich durch die notwendigen Vorrichtungen zum Halten der Materialstange in der Einführausgangsposition verbaut ist, da die Hebevorrichtung die weitere Materialstange quer zur horizontalen Längsmittelebene von unten in die Einführausgangsposition verbringt.

Ein Verbringen einer weiteren Materialstange in die Einführausgangsposition lässt sich besonders einfach dadurch realisieren, dass das Materialstangenlademagazin eine in Schwerkraftrichtung unter einer durch die Ausrichtachse verlaufenden horizontalen Längsmittelebene angeordnete Aufnahmeposition für eine weitere einzuführende Materialstange aufweist.

Der Vorteil dieser Lösung ist darin zu sehen, dass damit die Möglichkeit besteht, die Materialstange nicht auf eine große Höhe zu verbringen, sondern in einfacher Weise bereits in geringer Höhe unterhalb der horizontalen Längsmittelebene aufzunehmen und dann in die Einführausgangsposition zu verbringen.

Eine besonders günstige Lösung sieht ferner vor, dass das Materialstangenlademagazin in der Materialstangenbeladeposition des Satzes von Materialstangenführungselementen und des Materialstangenvorschubelements einen sich mit mindestens einer Komponente in vertikaler Richtung zwischen der Einführausgangsposition und der Aufnahmeposition erstreckenden Freiraum aufweist.

Durch diesen Freiraum in der Materialstangenbeladeposition ist insbesondere in einfacher Weise ein Anheben der einzuführenden weiteren Materialstange von der Aufnahmeposition in die Einführausgangsposition möglich.

Zum Anheben der Materialstange, um diese in die Einführausgangsposition zu bewegen, sind die unterschiedlichsten Möglichkeiten denkbar.

Beispielsweise wäre es denkbar, hierzu eine externe Gerätschaft einzusetzen.

Eine besonders günstige Lösung sieht jedoch vor, dass das Materialstangenlademagazin eine Hebevorrichtung aufweist, mit welcher die weitere einzuführende Materialstange von der Aufnahmeposition in die Einführausgangsposition anhebbar und koaxial zur Ausrichtachse ausrichtbar ist.

Eine derartige Hebevorrichtung ist beispielsweise so ausgebildet, dass diese die weitere Materialstange von der Aufnahmeposition in die Einführausgangsposition bewegt, so dass in einfacher Weise eine Aufnahme der Materialstange seitens der Hebevorrichtung in der Aufnahmeposition möglich ist.

Insbesondere ist hierbei vorgesehen, dass die weitere Materialstange mittels der Hebevorrichtung längs der Hebebahn bewegbar ist, so dass durch die Hebevorrichtung der Verlauf der Hebebahn vorgegeben ist.

Bei einem besonders vorteilhaften Ausführungsbeispiel ist vorgesehen, dass die Materialstangenführungselemente und das Materialstangenvorschubelement in einem sich in der Längsrichtung erstreckenden Bewegungsraum in der Längsrichtung bewegbar sind und dass die Aufnahmeposition für eine weitere Materialstange außerhalb des Bewegungsraums liegt.

Der Vorteil dieser Lösung ist darin zu sehen, dass damit in einfacher Weise, ohne die Bewegung der Materialstangenführungselemente und des Materialstangenvorschubelements zu behindern, die Materialstange in der Aufnahmeposition deponiert werden kann und dann, wenn eine weitere Materialstange notwendig ist, in die Einführausgangsposition bewegt werden kann. Das erfindungsgemäße Materialstangenlademagazin weist zudem eine Führungsbasis auf, welche in einem auf einer ersten Seite einer durch die Ausrichtachse verlaufenden vertikalen Längsmittelebene liegenden Raumbereich angeordnet ist.

Das heißt, dass zumindest die koaxial zur Ausrichtachse angeordnete Materialstange seitlich neben der Führungsbasis verläuft. Hierbei ist ein Zugangsbereich zu dem Materialstangenlademagazin in einem auf einer zweiten, der Führungsbasis abgewandten Seite der vertikalen Längsmittelebene liegenden Raumbereich angeordnet, wobei die Führungsbasis auf einer Seite der vertikalen Längsmittelebene liegt und auf der gegenüberliegenden Seite der vertikalen Längsmittelebene der Zugangsbereich zu dem Materialstangenlademagazin vorgesehen ist, durch welchen eine Bedienungsperson Zugriff zu dem Materialstangenlademagazin hat.

Damit ist der Aufbau des erfindungsgemäßen Materialstangenlademagazins besonders ergonomisch. Zudem weist die Führungsbasis des erfindungsgemäßen Materialstangenlademagazins zwei zueinander parallele und im Abstand voneinander verlaufende Führungsbahnen auf, an denen der Satz von Materialstangenführungselementen sowie das Materialstangenvorschubelement geführt sind, wobei die Materialstangenführungselemente und das Materialstangenvorschubelement so ausgebildet sind, dass sich diese zwischen den Führungsbahnen erstrecken. Damit ist es möglich, die Materialstangenführungselemente und das Materialstangenvorschubelement nicht nur zu führen, sondern auch abzustützen und auch gegen ein Verkippen relativ zur Ausrichtachse stabil abgestützt zu führen, so dass dadurch insgesamt eine verbesserte Qualität der Führung und Positionierung der Materialstange durch die Materialstangenführungselemente und das Materialstangenvorschubelement gegeben ist.

Diese Ausbildung des Materialstangenlademagazins erlaubt eine stabile Führung der Materialstangenführungselementen sowie des Materialstangenvorschubelements relativ zur Ausrichtachse und somit eine zuverlässige und stabile Positionierung der Materialstange längs der Ausrichtachse und quer zu dieser bei der Bearbeitung eines vorderen Endes der Materialstange in der Werkzeugmaschine, wobei die Materialstange hierzu rotierend oder nicht rotierend aufgenommen sein kann.
Insbesondere ist dabei vorgesehen, dass die Führungsbasis eine erste Führungsbahn und eine zweite Führungsbahn sowie einen sich zwischen den Führungsbahnen erstreckenden Trägerkörper aufweist, der die Führungsbahnen relativ zueinander stabil und vibrationsunempfindlich hält. Insbesondere ist der Trägerkörper so ausgebildet, dass er einen die Führungsbahnen tragenden und auf einer einem Zugangsbereich des Materialstangenmagazins abgewandten Seite einer durch die Ausrichtachse verlaufenden vertikalen Längsmittelebene angeordneten Basiskörper aufweist.
Diese Ausbildung des Trägerkörpers hat den Vorteil, dass damit der Trägerkörper eine Zugangsseite des Materialstangenmagazins freigibt und somit einen einfachen Zugang zu dem Materialstangenmagazin für eine Bedienperson ermöglicht.
Insbesondere ist der Basiskörper so ausgebildet, dass er mit einem die erste Führungsbahn tragenden ersten Halteschenkel versehen ist.
Ferner ist der Basiskörper so ausgebildet, dass er mit einem die zweite Führungsbahn tragenden zweiten Halteschenkel versehen ist.
Dabei können die Führungsbahnen in auf unterschiedlichen Seiten einer vertikalen Längsmittelebene liegenden Raumbereichen angeordnet sein.

Eine besonders günstige Lösung sieht vor, dass die erste Führungsbahn in einem auf einer ersten Seite der vertikalen Längsmittelebene liegenden Raumbereich verläuft.

Ferner sieht eine vorteilhafte Lösung vor, dass die zweite Führungsbahn in dem der ersten Seite der vertikalen Längsmittelebene liegenden Raumbereich verläuft.

Diese Lösung erlaubt es, die Materialstangenführungselemente und das Materialstangenvorschubelement möglichst zuverlässig und sicher auf den einander gegenüberliegenden Seiten der vertikalen Längsmittelebene zu führen.

Insbesondere liegt der auf der ersten Seite der vertikalen Längsmittelebene liegende Raumbereich auf einer einer Zugangsseite des Materialstangenlademagazins abgewandten Seite auf einer einer Zugangsseite des Materialstangenlademagazins abgewandten Seite der durch die Ausrichtachse verlaufenden vertikalen Längsmittelebene.

Hinsichtlich der Lage der Führungsbahn relativ zu einer horizontalen durch die Ausrichtachse verlaufenden Längsmittelebene wurden bislang keine näheren Angaben gemacht.

So sieht eine vorteilhafte Lösung vor, dass die erste Führungsbahn in einem auf einer ersten Seite der horizontalen Längsmittelebene liegenden Raumbereich angeordnet ist.

Ferner ist zweckmäßigerweise vorgesehen, dass die zweite Führungsbahn in einem auf einer zweiten Seite der horizontalen Längsmittelebene liegenden Raumbereich angeordnet ist.

Dabei liegt vorzugsweise die erste Seite der horizontalen Längsmittelebene in Schwerkraftrichtung über der horizontalen Längsmittelebene und die zweite Seite der horizontalen Längsmittelebene in Schwerkraftrichtung unter der durch die Ausrichtachse verlaufenden horizontalen Längsmittelebene.

Ferner wurden im Zusammenhang mit der bisherigen Erläuterung der verschiedenen Ausführungsformen der erfindungsgemäßen Lösung keine näheren Angaben zu der Ausbildung der Materialstangenführungselemente gemacht.

So sieht eine zweckmäßige Lösung vor, dass jedes der Materialstangenführungselemente einen die Lageraufnahme umfassenden Zentralkörper und einen zur ersten Führung verlaufenden ersten Führungsarm sowie einen zur zweiten Führung verlaufenden zweiten Führungsarm aufweist.

Dabei können die Führungsarme in unterschiedlicher Art und Weise angeordnet sein.

Eine zweckmäßige Lösung sieht vor, dass der erste Führungsarm in einem auf einer ersten Seite der vertikalen Längsmittelebene liegenden Raumbereich zwischen dem Zentralkörper und der ersten Führung verläuft.

Alternativ oder ergänzend sieht eine weitere vorteilhafte Lösung vor, dass der erste Führungsarm in einem auf einer ersten Seite der horizontalen Längsmittelebene zwischen dem Zentralkörper und der ersten Führung liegenden Raumbereich verläuft.

Ferner ist zweckmäßigerweise vorgesehen, dass der zweite Führungsarm in einem auf der ersten Seite der vertikalen Längsmittelebene zwischen dem Zentralkörper und der zweiten Führung liegenden Raumbereich verläuft.

Ferner ist zweckmäßigerweise bei einer weiteren Ausführungsform vorgesehen, dass der zweite Führungsarm in einem auf der dem Basiskörper der Führungsbasis zugewandten Seite der vertikalen Längsmittelebene liegenden Raumbereich angeordnet ist.

Hinsichtlich des Verlaufs des zweiten Führungsarms relativ zur horizontalen Längsmittelebene ist vorzugsweise vorgesehen, dass der zweite Führungsarm in einem auf der zweiten Seite der horizontalen Längsmittelebene liegenden Raumbereich von dem Zentralkörper zu der zweiten Führung verläuft.

Auch hinsichtlich des Materialstangenvorschubelements wurden bislang keine näheren Angaben gemacht.

So sieht ebenfalls eine vorteilhafte Lösung vor, dass das Materialstangenvorschubelement einen Zentralkörper und einen zu der ersten Führung verlaufenden ersten Führungsarm sowie einen zu der zweiten Führung verlaufenden zweiten Führungsarm aufweist.

Dabei ist beispielsweise vorgesehen, dass der erste Führungsarm in einem auf der ersten Seite der vertikalen Längsmittelebene liegenden Raumbereich zwischen dem Zentralkörper und der ersten Führung verläuft.

Ferner ist vorzugsweise vorgesehen, dass der erste Führungsarm in einem auf einer ersten Seite der horizontalen Längsmittelebene liegenden Raumbereich zwischen dem Zentralkörper und der ersten Führung verläuft.

Hinsichtlich des zweiten Führungsarms ist zweckmäßigerweise vorgesehen, dass der zweite Führungsarm in einem auf der zweiten Seite der horizontalen Längsmittelebene zwischen dem Zentralkörper und der zweiten Führung liegenden Raumbereich verläuft.

Ferner ist es günstig, wenn der zweite Führungsarm in einem auf der ersten Seite der vertikalen Längsmittelebene zwischen dem Zentralkörper und der zweiten Führung liegenden Raumbereich verläuft.

Insbesondere sieht eine zweckmäßige Lösung vor, dass die Materialstangenführungselemente und das Materialstangenvorschubelement identisch ausgebildet sind.

Im Zusammenhang mit der bisherigen Erläuterung der einzelnen Ausführungsformen wurden zu der Hebevorrichtung keine näheren Angaben gemacht.

So ist zweckmäßigerweise vorgesehen, dass die Hebevorrichtung mindestens zwei Hebearme aufweist, mit welchen die Materialstange in der Aufnahmeposition von dem Materialstangenspeicher aufnehmbar und in die Einführausgangsposition anhebbar ist.

Um lange Materialstangen zuverlässig und präzise abstützen zu können, ist vorgesehen, dass die Hebevorrichtung mindestens drei Hebearme aufweist.

Hinsichtlich der Anordnung der Hebearme wurden dabei keine näheren Angaben gemacht.

So sieht eine zweckmäßige Lösung vor, dass die Hebearme in Richtung parallel zur Längsrichtung zwischen dem Satz von Materialstangenführungselementen in der Materialstangenbeladestellung und dem Materialstangevorschubelement in der Materiastangenbeladestellung angeordnet und an der Führungsbasis gehalten sind.

Dabei ist bislang nicht näher spezifiziert, wie die Hebearme zur Aufnahme der Materialstangen ausgebildet sind.

So ist zweckmäßigerweise vorgesehen, dass jeder der Hebearme endseitig mit einem Aufnahmeelement versehen ist, in welches die Materialstange einlegbar ist.

Beispielsweise sind die Aufnahmeelemente so ausgebildet, dass mit diesen die Materialstange längs der im Wesentlichen vertikal verlaufenden Hebebahn bewegbar ist.

Hinsichtlich der Bewegung der Hebearme wurden im Zusammenhang mit der bisherigen Erläuterung der Hebevorrichtung keine näheren Angaben gemacht.

Prinzipiell könnten die Hebearme durch einen gemeinsamen Antrieb antreibbar sein.

Eine zweckmäßige Lösung sieht jedoch vor, dass jeder der Hebearme durch einen eigenen Antrieb antreibbar sind. So dass jeder Hebearm einzeln bewegbar ist.

Beispielsweise ist hierzu vorgesehen, dass die Hebearme in Hebeführungen geführt und relativ zu diesen in einer Heberichtung verschiebbar sind.

Hinsichtlich der Anordnung der weiteren Materialstangen, die in die Zufuhrposition verbracht werden sollen, wurden bislang keine weiteren Angaben gemacht.

So sieht eine zweckmäßige Lösung vor, dass eine weitere einzuführende Materialstange in einem Materialstangenspeicher gespeichert und in einer Ausgabeposition zur Übernahme in die Aufnahmeposition zur Verfügung steht.

Damit lassen sich in einfacher Weise weitere Materialstangen so positionieren, dass diese in die Zufuhrposition verbracht werden können.

Besonders zweckmäßig ist es dabei, wenn der Materialstangenspeicher in einem auf einer der Führungsbasis gegenüberliegenden Seite der durch die Ausrichtachse verlaufenden vertikalen Längsmittelebene liegenden Raumbereich des Materialstangenlademagazins angeordnet ist, insbesondere wenn von dem Zugangsbereich ohnehin eine Bedienperson Zugang zu dem Materialstangenlademagazin haben soll und somit von dieser Seite auch in einfacher Weise den Materialstangenspeicher mit weiteren Materialstangen beschicken kann.

Um durch den Materialstangenspeicher die Bewegung der Materialstangenführungselemente und des Materialstangenvorschubelements nicht zu behindern ist vorzugsweise vorgesehen, dass die Materialstangeführungselemente und das Materialstangenvorschubelement in einem sich in der Längsrichtung erstreckenden Bewegungsraum in der Längsrichtung bewegbar sind und dass der Materialstangenspeicher außerhalb des Bewegungsraums liegt.

Beispielsweise weist hierzu der Materialstangenspeicher eine in Richtung der Ausgabeposition geneigte Beladeschräge für die im Materialstangenspeicher angeordneten Materialstangen auf.

Um die Materialstangen in die Hebevorrichtung einfach überführen zu können, ist vorzugsweise vorgesehen, dass die Ausgabeposition in Schwerkraftrichtung oberhalb der Aufnahmeposition angeordnet ist, von welcher aus ein Anheben der Materialstange in die Einführausgangsposition mit der Hebevorrichtung erfolgen kann.

Bei den erfindungsgemäßen Materialstangenmagazinen besteht die Notwendigkeit, auch bei abgearbeiteten Materialstangen die verbleibenden Reststücke möglichst weitgehend zu bearbeiten und aus diesen Werkstücke durch weitere Bearbeitung herzustellen.

Aus diesem Grund ist vorzugsweise vorgesehen, dass das Materialstangenlademagazin mit einer Nachschubstange versehen ist, welche von einer Aufbewahrposition in eine Nachschubposition bringbar ist.

Insbesondere ist dabei die Nachschubstange in der Aufbewahrposition in einem Innenraum der Führungsbasis angeordnet.

Vorzugsweise ist dabei vorgesehen, dass die Aufbewahrposition in einem Innenraum des Trägerkörpers der Führungsbasis angeordnet ist.

Ferner ist zum Einsetzen der Nachschubstange zweckmäßigerweise vorgesehen, dass die Nachschubstange von der Aufbewahrposition in die zur Ausrichtachse koaxial angeordnete Nachschubposition bewegbar ist, von welcher ein Einführen der Nachschubstange in die Lageraufnahmen der Materialstangenführungselemente erfolgen kann.

Zweckmäßigerweise ist hierzu vorgesehen, dass ein hinteres Ende der Nachschubstange durch die Aufnahme des Materialstangenvorschubelements beaufschlagbar und mittels des Materialstangenvorschubelements in Richtung der Werkzeugmaschine positionsgesteuert verschiebbar ist, um das Reststück der Materialstange soweit in die Werkzeugmaschine einzuschieben, dass lediglich eine nicht verwertbare Restlänge der Materialstange übrig bleibt, die gegebenenfalls noch durch die Nachschubstange in die Werkzeugmaschine ausgestoßen werden kann.

Hinsichtlich des Haltens der Nachschubstange wurden bislang im Zusammenhang mit den beschriebenen Ausführungsbeispielen keine näheren Angaben gemacht.

So sieht eine vorteilhafte Lösung vor, dass die Nachschubstange in einer Nachschubstangenaufnahme gehalten ist und durch eine Bewegungseinheit zwischen der Aufbewahrposition und der Nachschubposition hin- und her bewegbar ist.

Die Bewegungseinheit erlaubt es somit in einfacher Weise die Nachschubstange zwischen der Aufbewahrposition und der Nachschubposition zu bewegen.

Zur sicheren Führung der Nachschubstange auf ihrer der Werkzeugmaschine zugewandte Seite ist vorzugsweise vorgesehen, dass die Bewegungseinheit eine Führungsaufnahme für eine der Werkzeugmaschine zugewandte Seite der Nachschubstange aufweist.

Eine derartige Führungsaufnahme hat den Vorteil, dass damit die Nachschubstange relativ zur Ausrichtachse exakt geführt werden kann.

Insbesondere ist dabei vorgesehen, dass die Führungsaufnahme die Nachschubstange sowohl in der Aufbewahrposition als auch in der Nachschubposition führt und positioniert hält.

Damit ist insbesondere eine Bewegung der Nachschubstange zwischen der Aufbewahrposition und der Nachschubposition sehr schnell durchführbar, da keine Verbindung zwischen der Führungsaufnahme und der Nachschubstange beim Bewegen von der Aufbewahrposition in die Nachschubposition gelöst und beim Bewegen von der Nachschubposition in die Aufbewahrposition wieder hergestellt wird.

Besonders günstig ist es, wenn die Führungsaufnahme die Nachschubstange permanent geführt hält, so dass sich dadurch einerseits die Führung der Nachschubstange mit großer Präzision realisieren lässt und andererseits damit die Gefahr von Fehlfunktionen bei nicht permanenter Halterung der Nachschubstange ausgeschlossen werden kann.

Dabei ist die Bewegungseinheit vorzugsweise an der Führungsbasis gehalten, so dass sich die Nachschubstange in einfacher Weise von der Aufbewahrposition, insbesondere im Innenraum der Führungsbasis, in die Nachschubposition bewegen lässt.

Hinsichtlich der Ausbildung der Lageraufnahmen wurden ebenfalls im Zusammenhang mit der bisherigen Erläuterung der einzelnen Ausführungsbeispiele keine näheren Angaben gemacht.

So ist es grundsätzlich denkbar, die Lageraufnahmen fest in den Materialstangenführungselementen anzuordnen.

Vorteilhaft ist es jedoch, wenn die Lageraufnahmen der Materialstangenführungselemente auswechselbar sind.

Beispielsweise lässt sich dies dadurch realisieren, dass die Lageraufnahmen in Richtung der Ausrichtachse aus den Materialstangenführungselementen herausnehmbar und wieder einsetzbar sind.

Eine andere vorteilhafte Lösung sieht vor, dass die Materialstangenführungselemente mit Aufnahmen versehen sind, in welche die Lageraufnahmen tragende Einsätze einsetzbar sind.

Dabei sind die Einsätze so ausgebildet, dass sie die Lageraufnahmen aufnehmen und vorzugsweise auch drehbar lagern, so dass die Lageraufnahmen mitsamt der drehbaren Lagerung derselben in den Einsätzen vorgesehen sind.

Zweckmäßigerweise sind in diesem Fall die Einsätze und die Aufnahmen so ausgebildet, dass die Einsätze in einer quer zur Ausrichtachse verlaufenden Einsetzrichtung in die Aufnahme einsetzbar und aus dieser wieder herausnehmbar sind.

Um eine feste Fixierung der Einsätze in den Aufnahmen zu erreichen, ist zweckmäßigerweise vorgesehen, dass die Einsätze mit einer Spanneinrichtung in den Aufnahmen fixierbar sind, wobei die Spanneinrichtung ein exaktes Positionieren der Einsätze in den Aufnahmen durch Einpressen der Einsätze in die Aufnahmen erlaubt, um eine exakte Ausrichtung der Lageraufnahmen zu der Ausrichtachse zu erreichen.

Im einfachsten Fall ist eine derartige Spanneinrichtung als Schnellspanneinrichtung ausgebildet.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine perspektivische Ansicht eines erfindungsgemäßen Materialstangenlademagazins zum Zuführen von Materialstangen zu einer Werkzeugmaschine;
- Fig. 2: eine Ansicht des Materialstangenlademagazins gemäß Fig. 1 mit Blick von einem Zugangsbereich auf das Materialstangenlademagazin;
- Fig. 3: eine Draufsicht auf ein Materialstangenführungselement in Richtung des Pfeils A in Fig. 2;
- Fig. 4: eine Draufsicht auf das erste Materialstangenführungselement in Richtung des Pfeils B in Fig. 2;
- Fig. 5: eine Draufsicht auf ein Materialstangenvorschubelement in Richtung des Pfeils C in Fig. 2;
- Fig. 6: einen Schnitt längs Linie 6-6 in Fig. 11;
- Fig. 7: einen Schnitt ähnlich Fig. 6 bei in Aufnahmeposition stehender Hebeeinrichtung;
- Fig. 8: eine vergrößerte Draufsicht von einer Zugangsseite auf eine Hebeeinheit;
- Fig. 9: einen Schnitt längs Linie 9-9 in Fig. 8;
- Fig. 10: eine perspektivische Darstellung des erfindungsgemäßen Materialstangenlademagazins bei in einer Materialstangenladeposition stehenden Materialstangenführungselementen und einem ebenfalls in Materialstangenladeposition stehenden Materialstangenvorschubelement;
- Fig. 11: eine Draufsicht von einem Zugangsbereich auf die in Materialstangenladeposition stehenden Materialstangenführungselemente und das in Materialstangenladeposition stehende Materialstangenvorschubelement bei in Einführausgangsposition angehobener Materialstange;
- Fig. 12: eine perspektivische Draufsicht auf ein Anschlagelement zum Erfassen einer Position der Materialstange in Richtung der Ausrichtachse;
- Fig. 13: eine Darstellung ähnlich Fig. 12 bei bereits mit der Materialstange überfahrenem Anschlagelement;
- Fig. 14: eine Darstellung eines Einschiebens der Materialstange in die Materialstangenführungselemente zum Erreichen der Zufuhrposition;
- Fig. 15: eine Darstellung des Materialstangenvorschubelements bei durch dieses maximal in Richtung der Werkzeugmaschine verschobener Materialstange sowie eine Darstellung einer Nachschubvorrichtung;
- Fig. 16: eine Darstellung des Materialstangenvorschubelements in der Nachschubstangenübergabeposition;
- Fig. 17: eine perspektivische Darstellung des Materialstangenvorschubelements in der Nachschubstangenübergabeposition und noch in einer Aufbewahrposition stehender Materialstange;
- Fig. 18: eine Darstellung ähnlich Fig. 17 allerdings in Form eines Schnitts längs Linie 18-18 in Fig. 16;
- Fig. 19: eine perspektivische Darstellung ähnlich Fig. 17 während eines Bewegens der Nachschubstange von der Aufbewahrposition in die Nachschubposition;
- Fig. 20: eine Darstellung ähnlich Fig. 17 bei in Nachschubposition bewegter Nachschubstange;
- Fig. 21: eine Darstellung ähnlich Fig. 18 bei der in Nachschubposition bewegten Nachschubstange;
- Fig. 22: eine Darstellung einer Führung eines vorderen Endes der Nachschubstange durch eine Nachschubstangenaufnahme in Aufbewahrposition;
- Fig. 23: eine Darstellung der Führung der Nachschubstange ähnlich Fig. 22 in Nachschubposition;
- Fig. 24: eine Darstellung eines zweiten Ausführungsbeispiels eines Materialstangenführungselements mit in einer Aufnahme und einem in die Aufnahme einsetzbaren Einsatz und
- Fig. 25: eine Darstellung des zweiten Ausführungsbeispiels des Materialstangenführungselement mit in die Aufnahme eingesetztem und durch eine Spanneinrichtung fixiertem Einsatz.

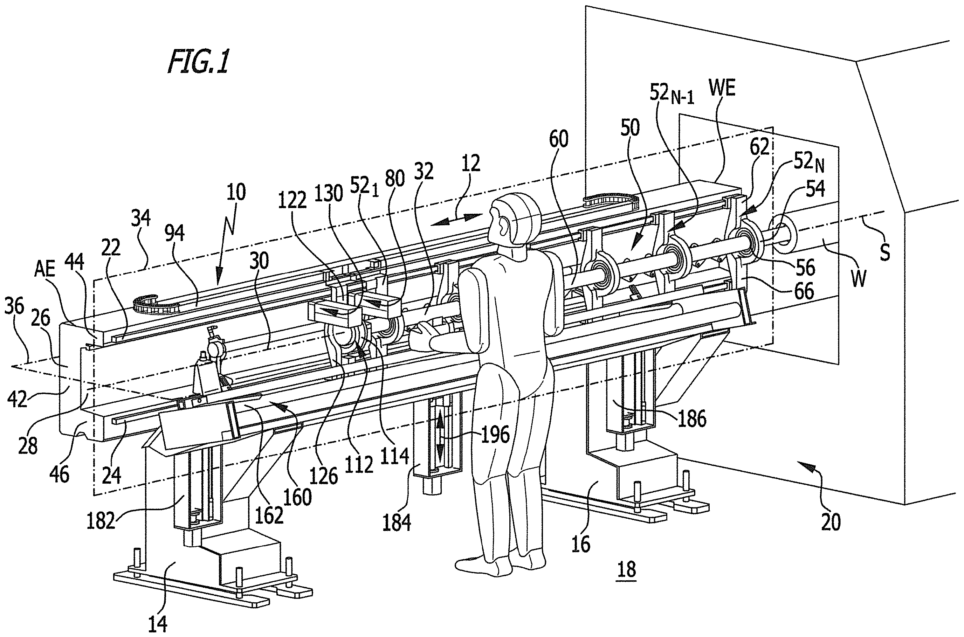

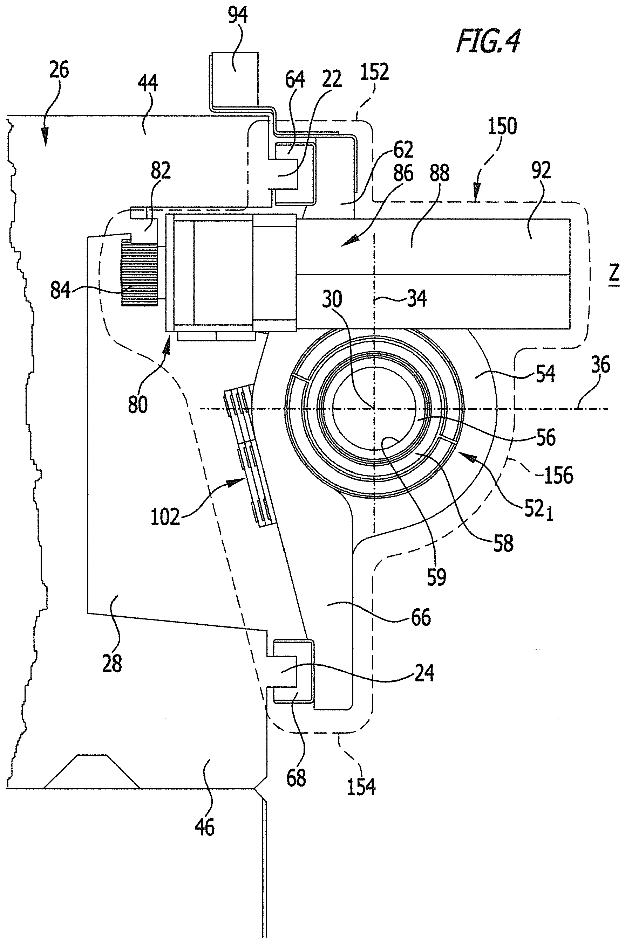

Ein in Fig. 1 bis 5 dargestelltes Ausführungsbeispiel eines erfindungsgemäßen Materialstangenlademagazins für eine Werkzeugmaschine 20 umfasst eine als Ganzes mit 10 bezeichnete Führungsbasis, welche sich in einer Längsrichtung 12 zwischen einem werkzeugmaschinenseitigen Ende WE und einem der Werkzeugmaschine 20 abgewandten Ende AE erstreckt und dabei auf Fußelementen 14 und 16 angeordnet ist, die in der Längsrichtung 12 im Abstand voneinander positioniert sind und ihrerseits auf einer Aufstellfläche 18 aufgestellt sind, wobei sich die Führungsbasis 10 mit der Längsrichtung 12 vorzugsweise in horizontaler Richtung erstreckt.

Die Führungsbasis 10 umfasst dabei zwei parallel zueinander, jedoch im Abstand voneinander verlaufende Führungsbahnen 22, 24, welche ebenfalls parallel zur Längsrichtung 12 verlaufen, insbesondere eine erste Führungsbahn 22 und eine zweite Führungsbahn 24, und außerdem einen im Querschnitt ungefähr C-förmigen, sich zwischen den Führungsbahnen erstreckenden Trägerkörper 26, welcher sich ebenfalls in der Längsrichtung 12 erstreckt und einen Innenraum 28 teilweise umschließt.

Die Führungsbahnen 22 und 24 sind ihrerseits ebenfalls parallel zu einer Ausrichtachse 30 angeordnet, welche koaxial zu einer Spindelachse der als Drehmaschine ausgebildeten Werkzeugmaschine 20 verläuft, welcher das erfindungsgemäße Materialstangenlademagazin eine koaxial zur Ausrichtachse 30 in einer Zufuhrposition angeordnete Materialstange 32 zuführen und während deren Bearbeitung koaxial zur Spindelachse führen soll.

Durch die Ausrichtachse 30 sind eine vertikale durch diese hindurch verlaufende Längsmittelebene 34 sowie eine senkrecht zur vertikalen Längsmittelebene 34 durch die Ausrichtachse 30 hindurch verlaufende horizontale Längsmittelebene 36 definiert.

Insbesondere umfasst der im Querschnitt C-ähnlich ausgebildete Trägerkörper 26 einen Basiskörper 42, von welchem ausgehend sich ein erster Halteschenkel 44 erstreckt, welcher an seiner dem Basiskörper 42 abgewandten Endseite die erste Führungsbahn 22 trägt, sowie einen zweiten Halteschenkel 46, welcher sich ausgehend von dem Basiskörper 42 erstreckt und dann an einer dem Basiskörper 42 abgewandten Endseite die zweite Führungsbahn 24 trägt, wobei der Basiskörper 42 und die Halteschenkel 44, 46 den Innenraum 28 teilweise umschließen.

Vorzugsweise liegt der Basiskörper 42 auf einer Seite der vertikalen Längsmittelebene 34, und zwar auf einer einem Zugangsbereich für eine Bedienungsperson des Materialstangenlademagazins abgewandten ersten Seite, und erstreckt sich quer zur horizontalen Längsmittelebene 36 zwischen dem ersten Halteschenkel 44 und dem zweiten Halteschenkel 46.

Ferner erstreckt sich der erste Halteschenkel 44 ausgehend von dem Basiskörper 42 quer zur vertikalen Längsmittelebene 34, und zwar nur so weit, dass die erste Führungsbahn 22 auf einer dem Basiskörper 42 zugewandten ersten Seite der vertikalen Längsmittelebene 34 liegt und somit auf einer dem Zugangsbereich des Materialstangenlademagazins abgewandten Seite der vertikalen Längsmittelebene 34.

Auch der zweite Halteschenkel 46 erstreckt sich quer zur vertikalen Längsmittelebene 34, und zwar ebenfalls nur so weit, dass die zweite Führungsbahn 24 auf einer dem Basiskörper 42 zugewandten Seite der vertikalen Längsmittelebene 34 und somit auf der dem Zugangsbereich des Materialstangenlademagazins abgewandten zweiten Seite der vertikalen Längsmittelebene 34 angeordnet ist.

Ferner liegt insbesondere der erste Halteschenkel 44 in vertikaler Richtung oberhalb der horizontalen Längsmittelebene 36 und somit auf einer ersten Seite der horizontalen Längsmittelebene 36, während der zweite Halteschenkel 46 in vertikaler Richtung unterhalb der horizontalen Längsmittelebene 36 angeordnet ist und somit auf einer zweiten Seite der horizontalen Längsmittelebene 36 liegt.

Insbesondere ist der Trägerkörper 26 als im Querschnitt ungefähr C-förmiges einstückiges Formteil, beispielsweise als ein Mineralgussteil oder ein Betonformteil oder ein Stahlschweißteil, ausgeführt, an welchem die Führungsbahnen 22, 24 bildende Führungsschienen montiert sind.

Bei der erfindungsgemäßen Ausbildung des Trägerkörpers 26 liegen somit die Führungsbahnen 22, 24 zum einen auf der dem Zugangsbereich abgewandten ersten Seite der vertikalen Längsmittelebene 34 und zum anderen auch auf einander gegenüberliegenden Seiten der horizontalen Längsmittelebene 36 und erstrecken sich insbesondere über die gesamte Länge des Trägerkörpers 26 in der Längsrichtung 12.

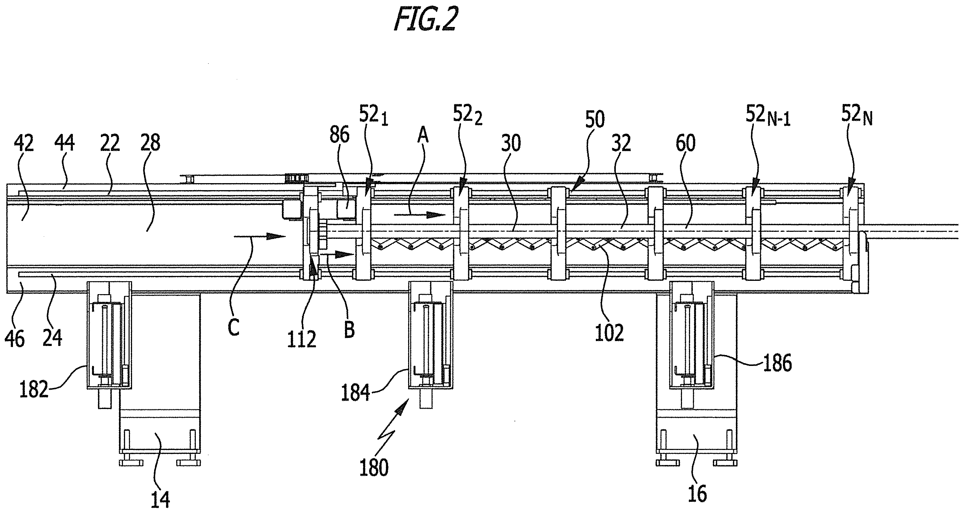

An den Führungsbahnen 22, 24 der Führungsbasis 10 ist ein Satz 50 von Materialstangenführungselementen 52₁ bis 52_{N} geführt, die alle identisch ausgebildet sind und dazu dienen, insbesondere in der in Fig. 1 und 2 dargestellten Materialstangenführungsstellung, die koaxial zur Ausrichtachse 30 in einer Zufuhrposition 60 zu der Drehmaschine 20 und somit koaxial zur Ausrichtachse 30 angeordnete Materialstange 32 auch im um die Ausrichtachse 30 rotierenden Zustand zu führen, wobei die Materialstangenführungselemente 52 des Satzes 50 der Materialstangenführungselemente 52 längs der Führungsbahnen 22 und 24 verschiebbar sind.

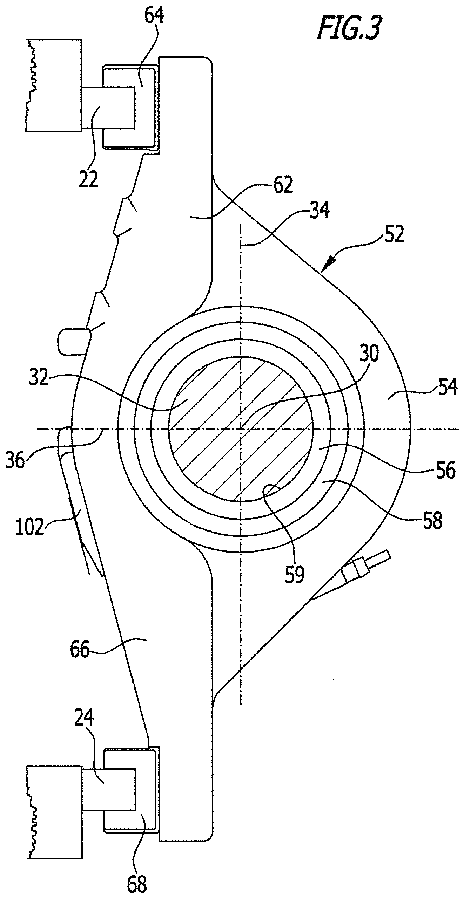

Jedes der Materialstangenführungselemente 52 umfasst, wie in Fig. 1 und 3 dargestellt, einen Zentralkörper 54, in welchem eine Lageraufnahme 56 für eine koaxial zur Ausrichtachse 30 angeordnete und um die Ausrichtachse 30 rotierende Materialstange 32 angeordnet ist, wobei die Lageraufnahme 56 mittels eines Drehlagers 58, beispielsweise durch ein Wälzlager, drehbar in dem Zentralkörper 54 gelagert ist und somit mit der Materialstange 32 mitrotieren kann.

Vorzugsweise ist ein Durchlass 59 der Lageraufnahme 56 ein einem Durchmesser der Materialstange 32 angepasst, um diese so exakt wie möglich koaxial zur Ausrichtachse 30 zu führen.

Um Materialstangen 32 mit unterschiedlichen Durchmessern einsetzen zu können, sind die Lageraufnahmen 56 vorzugsweise auswechselbar und somit an dem Durchmesser der jeweiligen Materialstange 32 anpassbar.

Ausgehend von dem Zentralkörper 54 des jeweiligen Materialstangenführungselements 52 erstreckt sich bei jedem der Materialstangenführungselemente 52 ein erster Führungsarm 62 desselben in Richtung der ersten Führungsbahn 22, wobei der erste Führungsarm 62 einen Führungskörper 64 trägt, welcher an der ersten Führungsbahn 22 geführt ist.

Dabei liegt der erste Führungsarm 62 in vertikaler Richtung oberhalb der horizontalen Längsmittelebene 36 und somit auf einer ersten Seite derselben und außerdem auf einer ersten, einer Zugangsseite des Materialstangenlademagazins abgewandten und einer dem Basiskörper 42 zugewandten Seite der vertikalen Längsmittelebene 34, so dass auch der erste, an der Führungsbahn 22 geführte Führungskörper 64 sowohl auf der ersten Seite der horizontalen Längsmittelebene 36 als auch auf der ersten Seite der vertikalen Längsmittelebene 34 angeordnet ist.

Ferner erstreckt sich ausgehend von dem Zentralkörper 54 ein zweiter Führungsarm 66 zu der zweiten Führungsbahn 24, wobei auch der zweite Führungsarm 66 einen Führungskörper 68 trägt, welcher an der zweiten Führungsbahn 24 geführt ist.

Der zweite Führungsarm 66 liegt dabei in vertikaler Richtung unterhalb der horizontalen Längsmittelebene 36 und somit auf einer zweiten Seite derselben und außerdem auf einer dem Basiskörper 42 zugewandten Seite der vertikalen Längsmittelebene 34 und somit auf der ersten Seite derselben in gleicher Weise wie auch der vom zweiten Führungsarm 66 gehaltene zweite Führungskörper 68.

Bei dem Satz 50 von Materialstangenführungselementen 52 ist das der Drehmaschine nächstliegende Materialstangenführungselement 52_{N} am werkzeugmaschinenseitigen Ende WE der Führungsbasis 10 vorzugsweise stationär relativ zu dem Trägerköper 26 angeordnet, während die übrigen Materialstangenführungselemente 52₁ bis 52_{N-1} längs der Führungsbahnen 22, 24 verschiebbar sind.

Zum Verschieben der Materialstangenführungselemente 52 erfolgt insbesondere, wie in Fig. 1, 2 und 4 dargestellt, ein Verschieben des ersten Materialstangenführungselements 52₁ mittels eines Verschiebeantriebs 80, welcher eine sich parallel zu der Längsrichtung 12 erstreckende und fest am Trägerkörper 26, insbesondere am Halteschenkel 44, gehaltene Zahnstange 82 aufweist, die vorzugsweise im Innenraum 28 des Trägers 26, zwischen den Halteschenkeln 44 und 46 des Trägerkörpers 26 angeordnet ist.

In diese Zahnstange 82 greift ein Antriebsritzel 84 einer Antriebseinheit 86 des Verschiebeantriebs 80 ein, wobei die Antriebseinheit 86 fest am ersten Materialstangenführungselement 52, gehalten ist.

Die Antriebseinheit 86 umfasst beispielsweise eine Motor-Getriebeeinheit 88, vorzugsweise mit einem Elektromotor 92, oder auch einen direkt auf die Zahnstange 82 wirkenden Antrieb der über eine Schleppkettenanordnung 94, die auf dem Halteschenkel 44 aufliegend angeordnet ist, versorgt und ansteuerbar ist.

Vorzugsweise erfolgt ein Bewegen des ersten Materialstangenführungselements 52₁ mittels der dem Verschiebeantrieb 80 zugeordneten Antriebseinheit 86 so, dass je nach Drehrichtung des Antriebsritzels 84 das erste Materialstangenführungselement 52₁ von dem letzten Materialstangenführungselement 52_{N} wegbewegbar oder auf dieses zubewegbar ist.

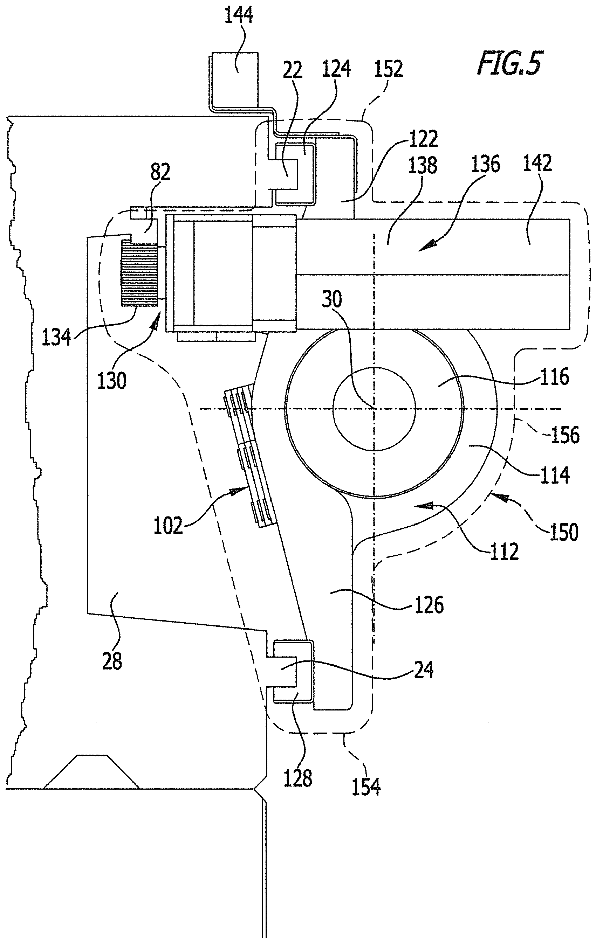

Die zwischen dem ersten Materialstangenführungselement 52₁ und dem letzten Materialstangenführungselement 52_{N} angeordneten Materialstangenführungselemente 52₂ bis 52_{N-1} sind miteinander und mit dem ersten Materialstangenführungselement 52₁ sowie dem letzten Materialstangenführungselement 52_{N} durch ein Scherengitter 102 gekoppelt, wobei das Scherengitter 102, wie in Fig. 5 dargestellt, auf einer dem Basiskörper 42 zugewandten Seite des zweiten Führungsarms 66 und des Zentralkörpers 54 liegt.

Das Scherengitter 102 sorgt dafür, dass die Materialstangenführungselemente 52₁ bis 52_{N} in allen Stellungen, insbesondere in den Materialstangenführungsstellungen, relativ zueinander, insbesondere in allen Positionen des ersten Materialstangenführungselements 52₁ relativ zum letzten Materialstangenführungselements 52_{N}, denselben Abstand voneinander aufweisen.

Somit ist durch den Verschiebeantrieb 80 in Kombination mit dem Scherengitter 102 sichergestellt, dass der Satz 50 von Materialstangenführungselementen 52 in der Materialstangenführungsstellung in der Lage ist, die zu führende Materialstange 32 mittels der Lageraufnahmen 56 optimal zentriert zu der Ausrichtachse 30 abzustützen und zu führen, insbesondere mit in jeder Relativposition stets in demselben Abstand voneinander angeordneten Lageraufnahmen 56 der Materialstangenführungselemente 52.

An den Führungsbahnen 22, 24 der Führungsbasis 10 ist zusätzlich zu den Materialstangenführungselementen 52 noch ein Materialstangenvorschubelement 112 geführt, welches, wie insbesondere in Fig. 1, 2 und 5 dargestellt, einen Zentralkörper 114 aufweist, welcher eine Aufnahme 116, insbesondere für ein Ende der in der Zufuhrstellung stehenden und koaxial zur Ausrichtachse 30 ausgerichteten und geführten Materialstange 32, aufweist, wobei die Aufnahme 116 in der Lage ist, im einfachsten Fall eine auf das der Drehmaschine 20 abgewandte Ende der Materialstange 32 wirkende und dieses in Richtung der Drehmaschine 20 beaufschlagende Anschlagfläche aufweist oder so ausgebildet sein kann, dass sie in der Lage ist, die Materialstange 32 umfangsseitig zu greifen und gegen eine Relativbewegung zur Aufnahme 116 in Richtung der Ausrichtachse 30 zu fixieren.

Ausgehend von dem Zentralkörper 114 erstreckt sich dabei ein erster Führungsarm 122 zu einem ersten Führungskörper 124, wobei der erste Führungsarm 122 und der erste Führungskörper 124 jeweils auf der ersten Seite der vertikalen Längsmittelebene 34 sowie der ersten Seite der horizontalen Längsmittelebene 36 liegen.

Ferner erstreckt sich von dem Zentralkörper 114 ein zweiter Führungsarm 126 zu einem zweiten Führungskörper 128, welcher an der zweiten Führungsbahn 24 geführt ist, wobei der zweite Führungsarm 126 und der zweite Führungskörper 128 jeweils auf einer ersten Seite der vertikalen Längsmittelebene 34 und einer zweiten Seite der horizontalen Längsmittelebene 36 liegen.

Vorzugsweise sind der Zentralkörper 114 und die Führungsarme 122 und 126 mit den Führungskörpern 124 und 128 des Materialstangenvorschubelements 112 vom Prinzip her ähnlich, insbesondere identisch, ausgebildet wie der Zentralkörper 54 und die Führungsarme 62 und 66 sowie die Führungskörper 64 und 68 der Materialstangenführungselemente 52.

Auch das Materialstangenvorschubelement 112 ist längs der Führungsbahnen 22 und 24 in der Längsrichtung 12 und somit in Richtung parallel zu der Ausrichtachse 30 relativ zur Führungsbasis 10 verschiebbar.

Hierzu ist ebenfalls ein Verschiebeantrieb 130 vorgesehen, welcher die in dem Innenraum 28 des Trägers 26 angeordnete Zahnstange 82 sowie eine Antriebseinheit 136 mit einem Antriebsritzel 134 umfasst, das in die Zahnstange 82 eingreift.

Die Antriebseinheit 136 ist fest an dem Materialstangenvorschubelement 112 gehalten.

Die Antriebseinheit 136 umfasst beispielsweise eine Motor-Getriebeeinheit 138, vorzugsweise mit einem Elektromotor 142, oder einen direkt auf die Zahnstange 82 wirkenden Antrieb der über eine Schleppkettenanordnung 144, die auf dem Halteschenkel 44 aufliegend angeordnet ist, versorgt und ansteuerbar ist (Fig. 5).

Mit dem Verschiebeantrieb 130 besteht somit die Möglichkeit, das Materialstangenvorschubelement 112 in der Längsrichtung 12 gesteuert zu verschieben und somit aufgrund der Tatsache, dass die Aufnahme 116 in der Lage ist, auf die Materialstange 32 einzuwirken, die Materialstange 32 koaxial zur Ausrichtachse 30 in Richtung der Drehmaschine 20 zu verschieben.

Somit sind bei der erfindungsgemäßen Lösung die Materialstangenführungselemente 52 und das Materialstangenvorschubelement 112 in einem sich in der Längsrichtung 12 erstreckenden Bewegungsraum 150 bewegbar, welcher sich zwischen einer Oberseite 152 und einer Unterseite 154 erstreckt und an dessen einer Längsseite 156 der Zugangsbereich Z liegt, von welcher aus der Bewegungsraum 150 für eine Bedienungsperson zugänglich ist.

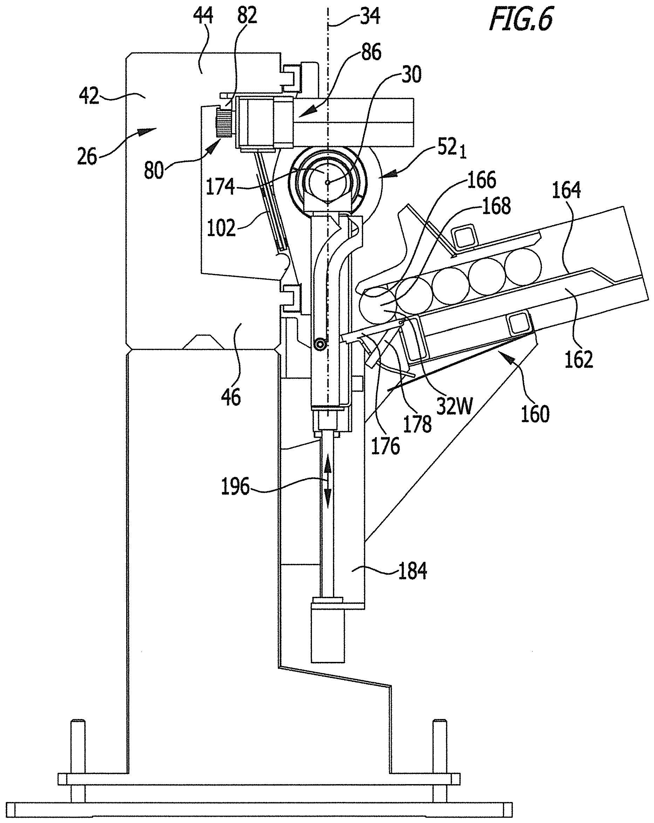

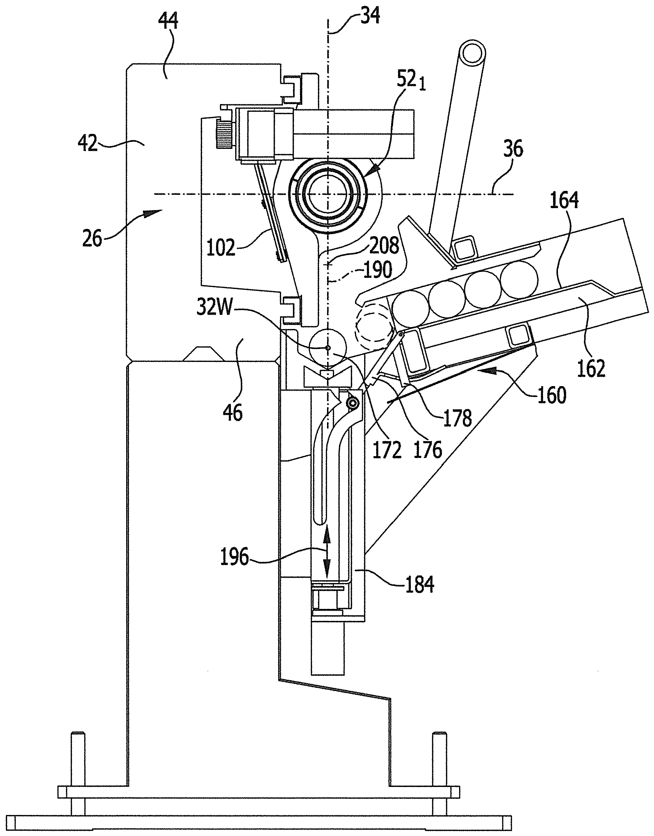

Zur Zufuhr weiterer Materialstangen 32W ist ein als Ganzes mit 160 bezeichneter Materialstangenspeicher vorgesehen, welcher, wie in Fig. 1 und Fig. 6 dargestellt, eine Materialstangenträgereinheit 162 aufweist, die eine Auflagefläche 164 für weitere Materialstangen 32W bildet, welche in vertikaler Richtung unterhalb der horizontalen Längsmittelebene 36 angeordnet ist und relativ zur horizontalen Längsmittelebene 36 geneigt verläuft, und zwar in Richtung einer Anschlagfläche 166, die ebenfalls in vertikaler Richtung unterhalb der horizontalen Längsmittelebene 36 und auch unterhalb der Zentralkörper 54 und 114 der Materialstangenführungselemente 52 sowie des Materialstangenvorschubelements 112 angeordnet ist, so dass durch die Anschlagfläche 166 und die Auflagefläche 164 eine Abgabeposition 168 für die weitere Materialstange 32W definiert ist, in welcher diese weitere Materialstange 32W von dem Materialstangenspeicher 160 abgegeben, in einer Aufnahmeposition 172 (Fig. 7) aufgenommen und in eine Einführausgangsposition 174 (Fig. 6) überführt werden kann, in welcher diese Materialstange 32W dann koaxial zur Ausrichtachse 30 ausgerichtet ist.

Alle weiteren, auf der Auflagefläche 164 aufliegenden Materialstangen 32W werden bei Entnahme der in der Abgabeposition 168 befindlichen Materialstange 32W aufgrund der Neigung der Auflagefläche 164 nachfolgend sich aufgrund der Schwerkraft in Richtung der Abgabeposition 168 bewegen, so dass jede aus der Abgabeposition 168 des Materialstangenspeichers 160 entnommene weitere Materialstange 32W nachfolgend durch die nächstfolgende Materialstange 32W auf der Auflagefläche 164 der Materialstangenträgereinheit 162 ersetzt wird.

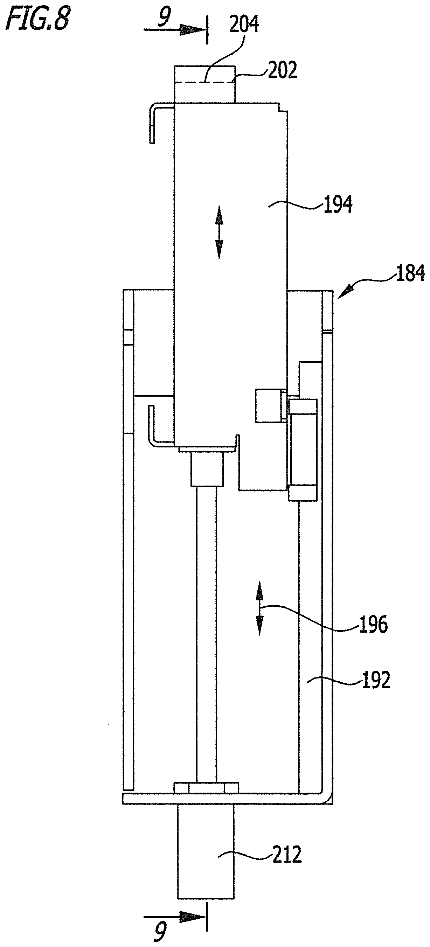

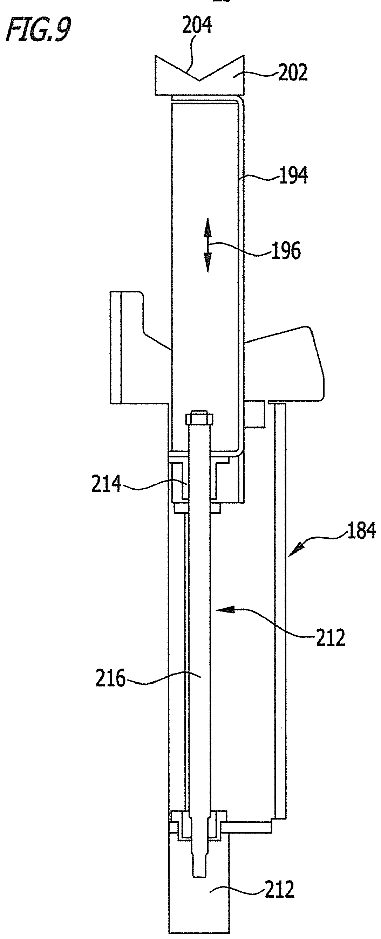

Zum Überführen der jeweiligen Materialstange 32W von der Abgabeposition 168 in die Zufuhrposition 172 ist eine in Fig. 1 bis 7 dargestellte Hebevorrichtung 180 vorgesehen, welche insgesamt drei Hebeeinheiten 182, 184 und 186 aufweist, von denen jede eine Hebeführung 192 aufweist, an welcher ein Hebearm 194, wie in Fig. 8 und 9 dargestellt, in einer Heberichtung 196 linear bewegbar geführt sind, wobei die Heberichtung 196 quer zur Ausrichtachse 30 und quer zur Ausrichtung der Materialstange 32 W in der Aufnahmeposition 172 verläuft.

Jede der Hebeeinheiten 182, 184, 186 weist ferner, wie in Fig. 8 und 9 dargestellt, ein Aufnahmeelement 202 auf, welches beispielsweise eine als Aufnahmeprisma 204 ausgebildete V-förmige Fläche aufweist, die in der Lage ist, die jeweils aus der Abgabeposition 168 in die Aufnahmeposition 172 abgegebene weitere anzuhebende Materialstange 32W zu halten.

Alle Aufnahmeelemente 202 aller Hebeeinheiten 182, 184 und 186 liegen in einer Hebeausgangsstellung, dargestellt in Fig. 1, 2 und 7, in vertikaler Richtung unterhalb der Abgabeposition 168 des Materialstangenspeichers 160 und vorzugsweise auch unterhalb der in die Anschlagfläche 166 übergehenden Auflagefläche 164 der Materialstangenträgereinheit 162 in der Abgabeposition 168.

Die Materialstangenträgereinheit 162 ist im Bereich der Hebeeinheiten 182, 184 und 186 so ausgebildet, dass die Aufnahmeelemente 202 in der Hebeausgangsstellung in der Lage sind, die in der Abgabeposition 168 liegende Materialstange 32W in das jeweilige Aufnahmeelement 202 aufzunehmen und dabei gegenüber den übrigen Materialstangen 32W auf der Auflagefläche 164 zu vereinzeln.

Von der Abgabeposition 168 erfolgt ein Übergeben der vereinzelten Materialstange 32W in die Aufnahmeposition 172, wenn sich das Aufnahmeelement 202 von der in Fig. 6 dargestellten Einführausgangsposition 174 in die Hebeausgangsstellung bewegt, wie in Fig. 7 dargestellt.

Dabei wird eine die weitere Materialstange 32W in der Abgabeposition 168 stützende Auflage 176 nach unten verschwenkt, so dass die weitere Materialstange 32W sich aufgrund der Wirkung der Schwerkraft aus der Abgabeposition 168 in die Aufnahmeposition 172 bewegt, sobald die Annahmeelemente 202 unterhalb der weiteren Materialstange 32W in der Abgabeposition 168 stehen, wie in Fig. 7 dargestellt.

Ein Nachrollen weiterer Materialstangen 32W in die Abgabeposition 168 wird durch einen Rückhalter 178 verhindert, der so lange wirksam ist, bis die in der Aufnahmeposition 172 aufgenommene Materialstange 32W über die Abgabeposition 168 angehoben wurde.

Erst dann kann die nächstfolgende der weiteren Materialstangen 32W in die Abgabeposition 168 rollen.

Nach dem Übernehmen und Vereinzeln der Materialstange 32W wird diese durch die Hebeeinheiten 182, 184 und 186 längs einer Hebebahn 190 aus der Aufnahmeposition 172 heraus in der Heberichtung 196 in Richtung der Ausrichtachse 30 bis in die Einführausgangsposition 174 bewegt, wie in Fig. 6 dargestellt.

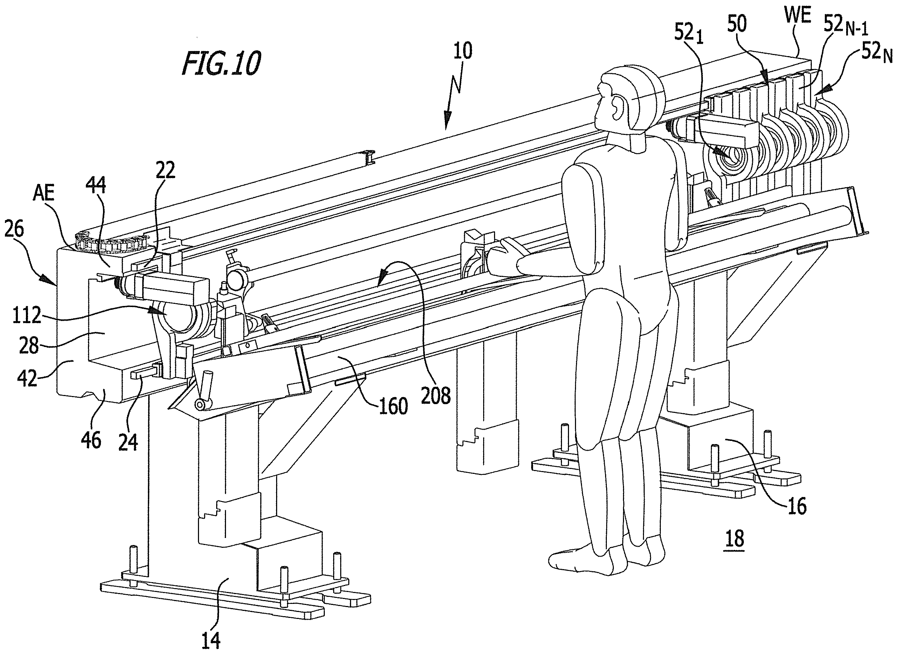

Um dabei eine Kollision mit den Materialstangenführungselementen 52 und dem Materialstangenvorschubelement 112 zu vermeiden, sind diese, wie in Fig. 10 dargestellt, vor dem Herausheben der Materialstange 32W aus der Aufnahmeposition 172 in eine Materialstangenbeladestellung zu verfahren, die in Fig. 10 dargestellt ist.

Hierzu wird, wie in Fig. 10 dargestellt, der Satz 50 von Materialstangenführungselementen 52 in Richtung des werkzeugmaschinenseitigen Endes WE der Führungsbasis 10 bewegt, wobei beispielsweise die Materialstangenführungselemente 52₁ bis 52_{N} so weit zusammengeschoben werden, dass sie nahezu aneinander anliegen.

Ferner wird das Materialstangenvorschubelement 112 so weit in Richtung eines der Werkzeugmaschine 20 abgewandten Endes AE der Führungsbasis 10 bewegt, vorzugsweise in die dem Ende AE zugeordnete Endstellung für das Materialstangenvorschubelement 112.

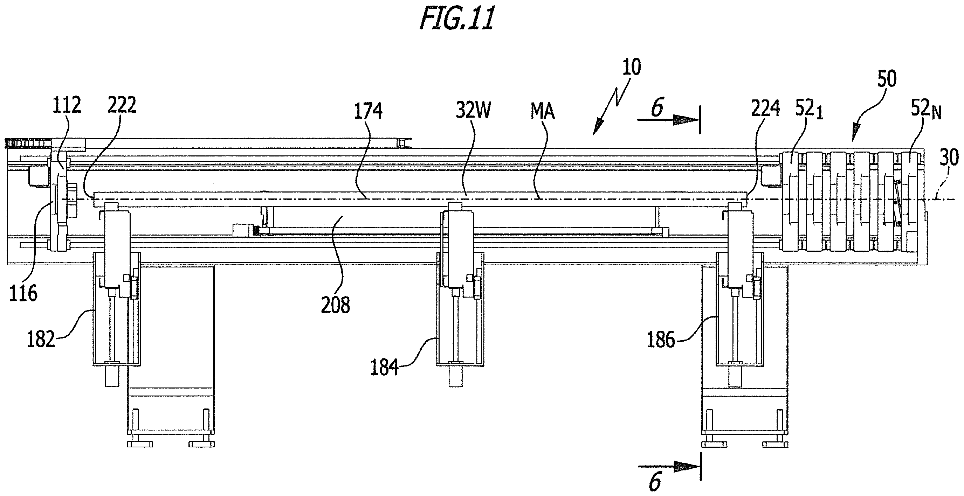

Somit entsteht zwischen der Aufnahmeposition 172 (Fig. 7) und der Einführausgangsposition 174 (Fig. 11) ein Freiraum 208, in welchem die Materialstange 32W kollisionsfrei bewegbar ist.

In dieser Materialstangenbeladestellung besteht die Möglichkeit, die Materialstange 32W längs der beispielsweise in der vertikalen Längsmittelebene 34 verlaufenden Hebebahn 190 von der Aufnahmeposition 172 durch den Freiraum 208 hindurch bis in die koaxial zur Ausrichtachse 30 ausgerichtete Einführausgangsposition 174 anzuheben, so dass eine Mittelachse MA der Materialstange 32W mit der Ausrichtachse 30 zusammenfällt, wie dies in Fig. 11 in der Einführausgangsposition 174 der weiteren Materialstange 32W dargestellt ist.

Wie beispielhaft in Fig. 8 und 9 im Zusammenhang mit der Hebearmeinheit 184 dargestellt, erfolgt ein Bewegen der Aufnahmeelemente 202 der Hebearmeinheiten 182, 184 und 186 durch einen Hebeantrieb 212 dadurch, dass der Hebearm 194 mit einer Spindelmutter 214 versehen ist, welche von einer mit dem Hebeantrieb 212 antreibbaren Gewindespindel 216 durchsetzt ist, so dass ein Drehen der Gewindespindel 216 ein Verschieben des jeweiligen Hebearms 194 in der Heberichtung 196 bewirkt.

Durch die Verwendung eines Schrittmotors für den Hebeantrieb 212 besteht die Möglichkeit, ausgehend von einem Endanschlag durch Zählen der Schritte definierte Zwischenstellungen anzufahren.

Diese Ausbildung der Hebeeinheiten 182, 184, 186 ermöglicht es, das jeweilige Aufnahmeelement 202 des jeweiligen Hebearms 194 relativ zu der Ausrichtachse 30 unabhängig von den anderen Aufnahmeelementen 202 der anderen Hebearme 194 zu bewegen.

Ausgehend von dieser in Fig. 11 dargestellten Materialstangenbeladestellung lässt sich nun die Materialstange 32 von ihrer Einführausgangsposition 174 in die in Fig. 1 bis 3 dargestellte Zufuhrposition 60 überführen, indem das Materialstangenvorschubelement 112 aus seiner Endstellung in der Materialstangenbeladestellung in Richtung der in der Einführausgangsposition 174 stehenden Materialstange 32 bewegt wird und mit der Aufnahme 116 auf ein der Werkzeugmaschine 20 abgewandtes Ende 222 der weiteren Materialstange 32 in Richtung der Werkzeugmaschine 20 beaufschlagt.

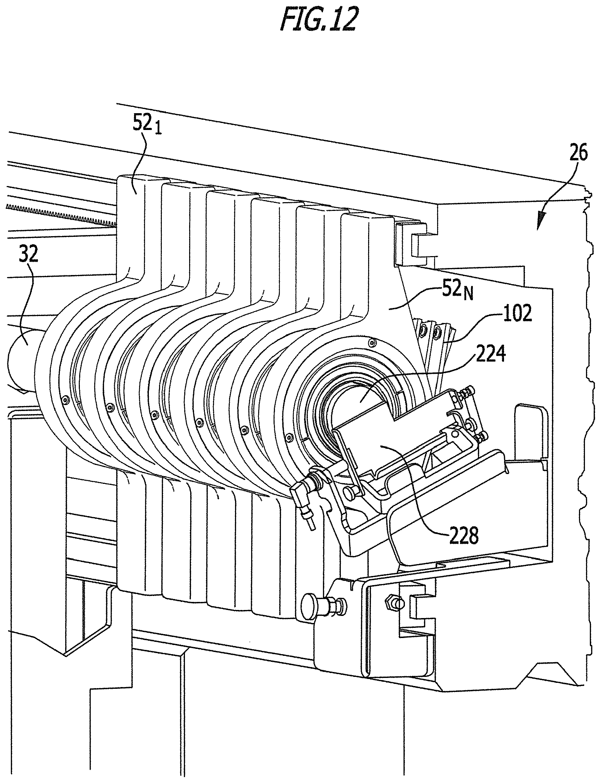

Durch weiteres Verschieben des Materialstangenvorschubelements 112 in Richtung des Satzes 50 von Materialstangenführungselementen 52 lässt sich die Materialstange 32 mit ihrem der Werkzeugmaschine 20 zugewandten Ende 224 in die Lageraufnahmen 56 der Materialstangenführungselemente 52 des gesamten Satzes 50 einführen und bis zu einem zur Festlegung einer definierten Stellung der Materialstange 32 auf einer der Werkzeugmaschine 20 zugewandten Seite des Satzes 50 von Materialstangenführungselementen 52 vorgesehenen Anschlagelement 228 (Fig. 12) verschieben, das entweder an der Führungsbasis 10 oder an der Werkzeugmaschine 20 angeordnet ist.

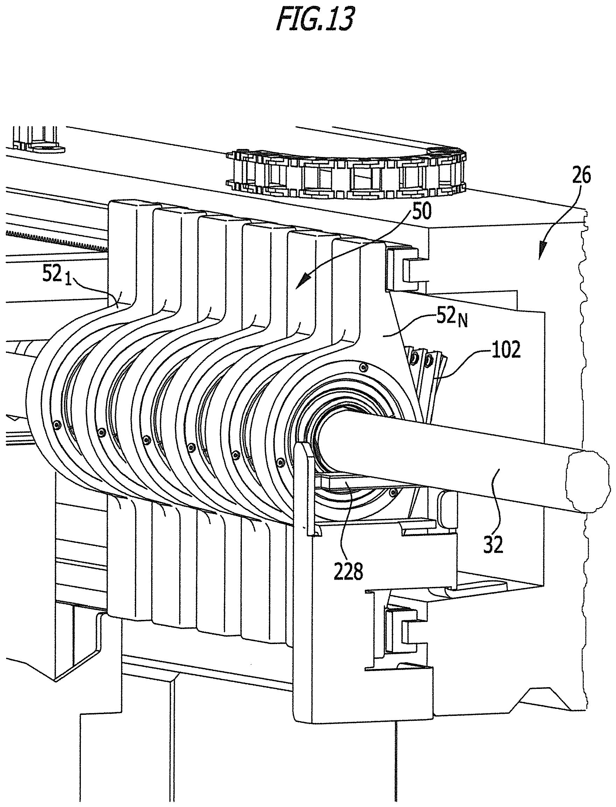

Die Lage der zwischen der Aufnahme 116 und dem Anschlagelement 228 koaxial zur Ausrichtachse 30 angeordneten Materialstange 32 wird dadurch bestimmt, dass eine Position des Materialstangenvorschubelements 112 dann erfasst wird, wenn das Ende 224 auf das Anschlagelement 228 wirkt und dieses bewegt, beispielsweise wie beispielhaft in Fig. 13 dargestellt, umklappt. Anschließend wird die Materialstange 32 durch Bewegen der Materialstangenführungselemente 52 in Richtung des Materialstangenvorschubelements 112, insbesondere Bewegen des ersten Materialstangenführungselements 52₁ bis zum Materialstangenvorschubelements 112, abgestützt.

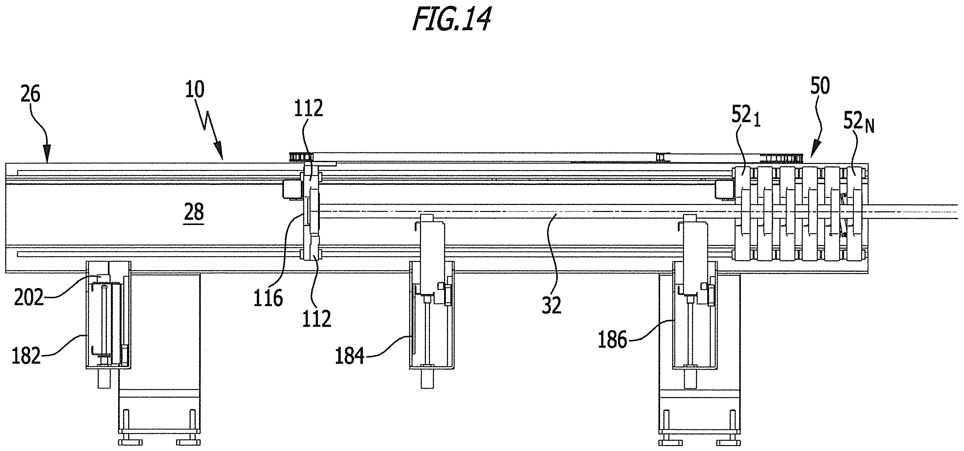

Je nach Lage und Länge der Materialstange 32 ist es hierzu erforderlich zuerst das Aufnahmeelement 202 der Hebearmeinheit 182 aus der vom Materialstangenvorschubelement 112 zu durchlaufenden Bahn zu entfernen, damit das Materialstangenvorschubelement 112 das Ende 222 der Materialstange 32W erreichen und die Materialstange 32 in Richtung der Drehmaschine 20 bis zum Anschlagelement 228 und darüber hinaus verschieben kann (Fig. 14).

Insbesondere sind vor einem Verfahren der Materialstangenführungselemente 52 die Hebearmeinheiten 182, 184, 186 entweder einzeln oder gemeinsam aus der Bahn der Materialstangenführungselemente 52 zu entfernen.

Beispielsweise erfolgt nach Beaufschlagung des Endes 222 durch die Aufnahme 116 lediglich eine Abstützung der Materialstange 32 durch die Aufnahmeelemente 202 der Hebeeinheiten 184 und 186, wobei die Aufnahmeelemente 202 der Hebeeinheiten 184 und 186 sukzessive oder gleichzeitig in die Hebeausgangsstellung bewegt werden, wenn die Materialstange 32 die Aufnahme 116 und die Lageraufnahmen 56 ausreichend abgestützt sind.

Alternativ dazu ist es aber auch denkbar, die Materialstangenführungselemente 52 des Satzes 50 von Materialstangenführungselementen 52 in Richtung des Materialstangenvorschubelements 112 zu bewegen und dadurch ebenfalls das Ende 224 in die Lageraufnahmen 56 der Materialstangenführungselemente 52 einzuschieben.

Das Verschieben der Materialstangenführungselemente 52 erfolgt so lange, bis die Materialstange 32 einerseits durch das Materialstangevorschubelement 112 und andererseits durch die Materialstangenführungselemente 52 sicher geführt ist, wobei die Materialstange 32 in ihrer Zufuhrposition 60 durch die in gleichen Abständen voneinander angeordneten Lageraufnahmen 56 der Materialstangenführungselemente 52 aufgenommen und abgestützt ist.

Wie in den Fig. 10, 11 sowie 15 und 16 dargestellt, ist das Materialstangenlademagazin noch mit einer als Ganzes mit 240 bezeichneten Nachschubvorrichtung versehen, die beispielsweise auf dem unteren Halteschenkel 46 sitzend in den Innenraum 28 angeordnet ist und somit zwischen dem unteren Halteschenkel 46 und dem oberen Halteschenkel 44 liegt.

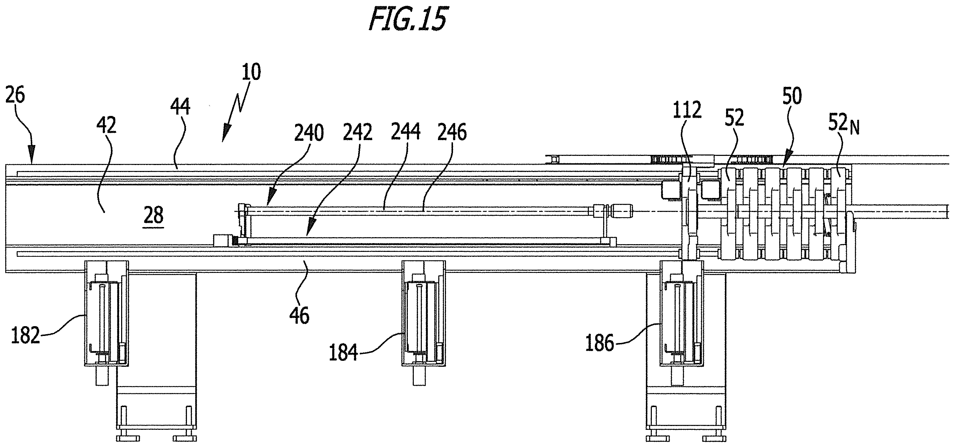

Die Nachschubvorrichtung 240 umfasst eine Nachschubstangenaufnahme 242, in welcher eine Nachschubstange 244 in einer in Fig. 15 dargestellten und so als Ganzes mit 246 bezeichneten Aufbewahrposition positionierbar ist, ohne die Funktionen des Materialstangenlademagazins, insbesondere die Bewegungen der Materialstangenführungselemente 52 oder des Materialstangenvorschubelements 112 zu stören.

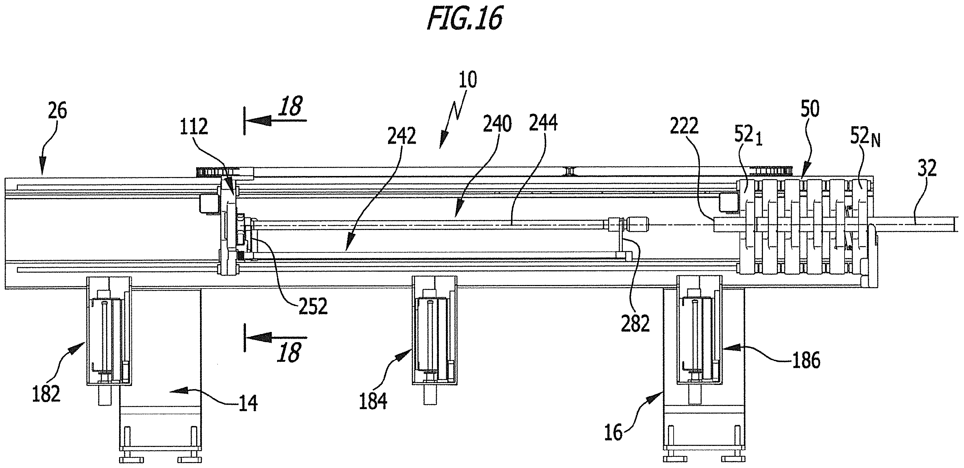

Um die Nachschubstange 244 zum Nachschieben der Materialstange 32 einsetzen zu können, ist diese von der Aufbewahrposition 246 in Fig. 15 und Fig. 16 in eine Nachschubposition zu überführen.

Hierzu sind zunächst ebenfalls das Materialstangenvorschubelement 112 sowie die Materialstangenführungselemente 52 in eine Nachschubstangenbeladestellung zu bewegen, wobei aufgrund der Kürze der Nachschubstange 244 der Zwischenraum zwischen dem ersten Materialstangenführungselement 52₁ und dem Materialstangevorschubelement 112 geringer sein kann, so dass das Materialstangenvorschubelement 112 nicht bis zu dem der Werkzeugmaschine 20 abgewandten Ende AE der Führungsbasis 10 verschoben werden muss, sondern in einer Position bleiben kann, in welcher dieses zwischen dem Hebearm 182 und dem Hebearm 184 steht, wie dies in Fig. 16 dargestellt ist.

Die Nachschubstangenaufnahme 242 ist, wie in Fig. 16 dargestellt, mit einer am stationären Trägerkörper 26 angeordneten Halterung 252 für die Nachschubstange 244 versehen, welche eine ungefähr U-förmige Ausnehmung 254 aufweist, die zwischen zwei Führungsfingern 256 und 258 liegt, wobei der in Schwerkraftrichtung unten liegende Führungsfinger 256 sich in Richtung des Materialstangenvorschubelements 112 erstreckt, wenn dieses in einer Nachschubstangenübergabeposition steht.

Das Materialstangenführungselement 112 weist seinerseits ein Führungsgehäuse 262 auf, welches im Abstand von der Aufnahme 116 für die Materialstange 32 eine Führungskulisse 264 bildet, die sich zwischen einer zur U-förmigen Ausnehmung 254 hin offenen Ausnehmung 266 und einer Positionieraufnahme 268 erstreckt, wobei die Positionieraufnahme 268 so ausgebildet und angeordnet ist, dass diese die Nachschubstange 244 koaxial zur Ausrichtachse 30 positioniert.

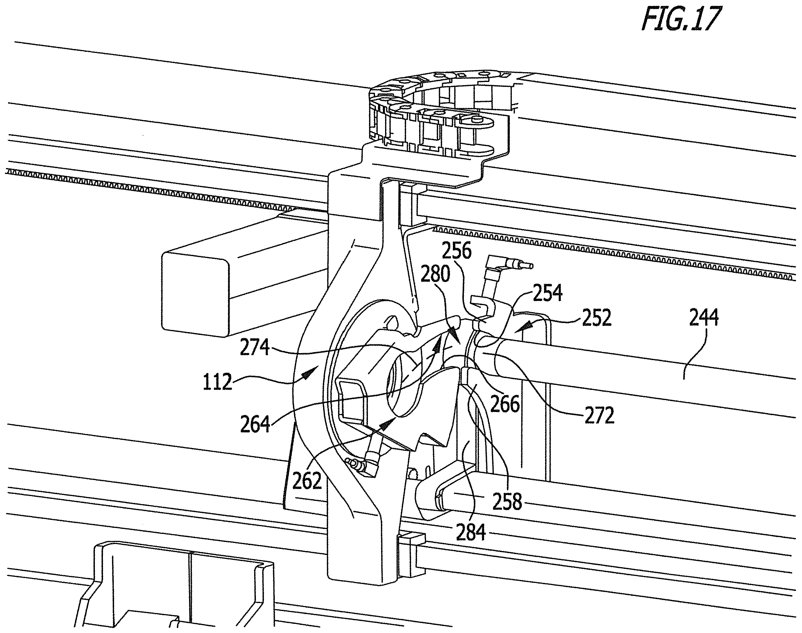

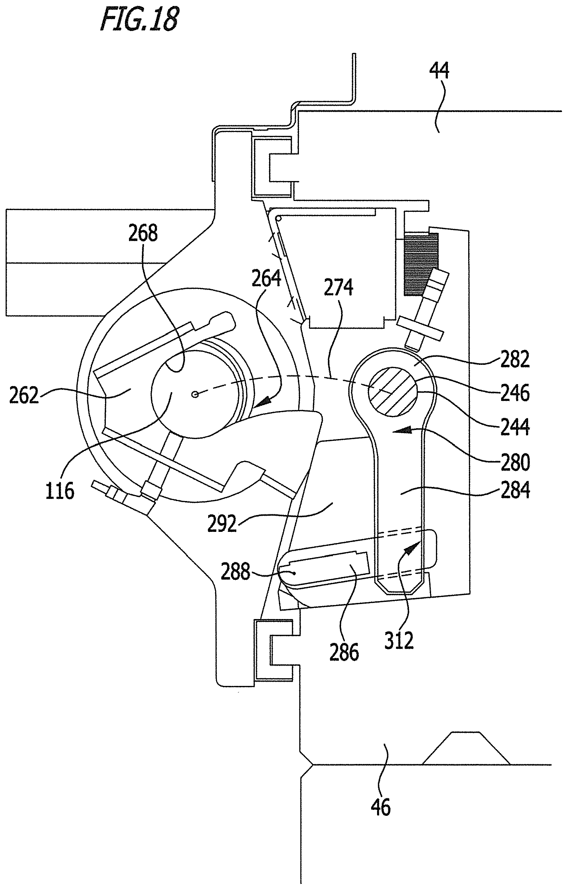

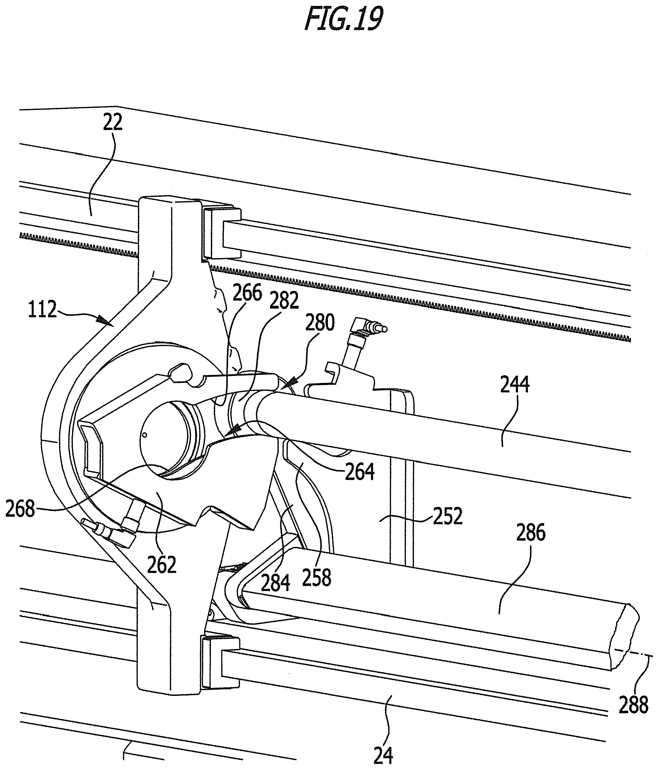

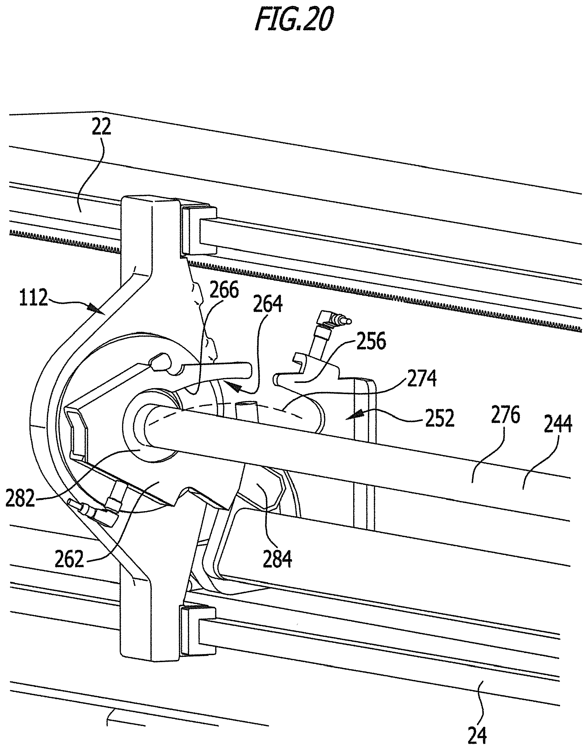

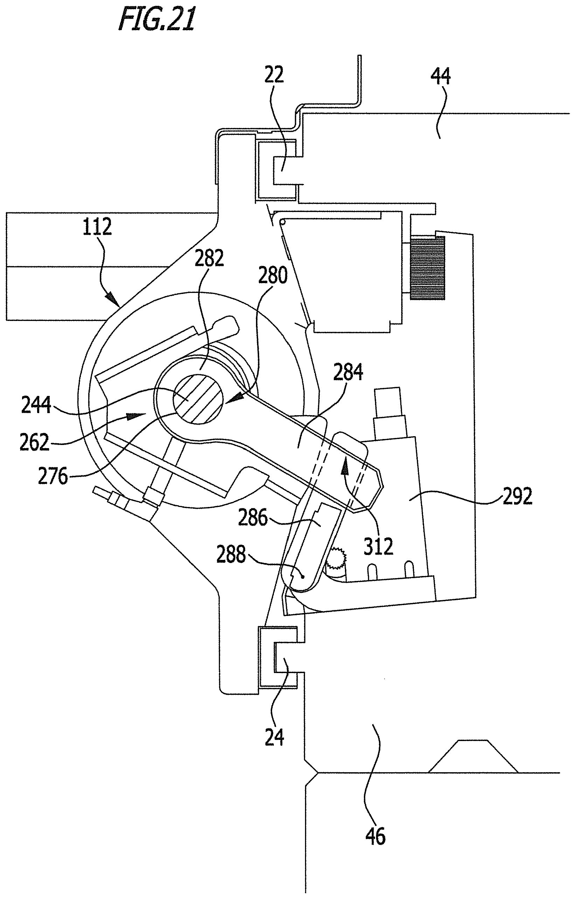

Vorzugsweise sind die U-förmige Ausnehmung 254 in der Halterung 252, die Ausnehmung 266 der Führungskulisse 264 und die Positionieraufnahme 268 der Führungskulisse 264 so ausgebildet, dass diese bei in der Nachschubstangenübergabeposition stehendem Materialstangenführungselement 112 ein der Werkzeugmaschine 20 abgewandtes hinteres Ende 272 der Materialstange 244 längs einer Bahn 274 führen, wobei eine Bewegung des Endes 272 der Nachschubstange 244 eine Bewegung zwischen der Aufbewahrposition 246 (Fig. 17, 18) längs der Bahn 274 (Fig. 19) in eine Nachschubposition 276 (Fig. 20, 21) ermöglicht, wobei die Nachschubstange 244 in der Nachschubposition 276 koaxial zur Ausrichtachse 30 angeordnet ist (Fig. 20).

Zur Fixierung des hinteren, der Werkzeugmaschine 20 abgewandtes Endes 272 der Nachschubstange 244 trägt dieses Ende 272 ein Halteelement 280, welches einerseits in der Aufbewahrposition (Fig. 17, 18) der Nachschubstange 244 auf einer der Werkzeugmaschine 20 abgewandten Seite der Führungsfinger 256, 258 steht und dann zwischen die Führungskulisse 268 und die Aufnahme 116 des Materialstangenvorschubelements 112 einführbar ist und in der Nachschubposition 276 (Fig. 20, 21) zwischen diesen gegen eine Bewegung in Richtung der Ausrichtachse 30 fixiert ist, so dass durch Bewegen des Materialstangenvorschubelements 112 ein Bewegen der Nachschubstange 244 in Richtung der Ausrichtachse 30 möglich ist, wenn die Nachschubstange 244 in der Nachschubposition 276 steht, wie sie in Fig. 20, 21 dargestellt ist.

Das Halteelement 280 umfasst dabei beispielsweise einen radial über die Nachschubstange 244 überstehenden Flanschkörper 282 sowie einen sich ausgehend von dem Flanschkörper 282 erstreckenden Arm 284.

Der Arm 284 ist in der Nachschubstangenübergabeposition formschlüssig mit einer als Schwenkeinheit ausgebildeten Bewegungseinheit 286 der Nachschubstangenaufnehme 242 verbunden, welche zwischen der Aufbewahrposition 246 und der Nachschubposition 276 um eine Schwenkachse 288 verschwenkbar ist (Fig. 18, 21), jedoch von der Schwenkeinheit durch eine Bewegung parallel zur Ausrichtachse 30 lösbar.

Zum Verschwenken des Arms 284 ist beispielsweise eine Schwenkantriebseinheit 292 vorgesehen, mittels welcher die Schwenkeinheit 286 zwischen der Aufbewahrposition 246 und der Nachschubposition 276 der Nachschubstange 244 hin- und her bewegbar ist.

Die Nachschubstange 244 ist ferner auf einer der Werkzeugmaschine 20 zugewandten Seite an einem Haltearm 302 der Schwenkeinheit 286 geführt, welcher eine Gabel 304 aufweist, in welche eine Führungsbüchse 306 eingesetzt ist, die die Nachschubstange 244 an ihrer Umfangsseite 308 permanent führt und längs der Umfangsseite 308 über die gesamte Länge der Nachschubstange 244 gleiten kann. Der Haltearm 302, die Gabel 304 und die Führungsbüchse 306 bilden eine Führungsaufnahme 310 für die Nachschubstange 244.

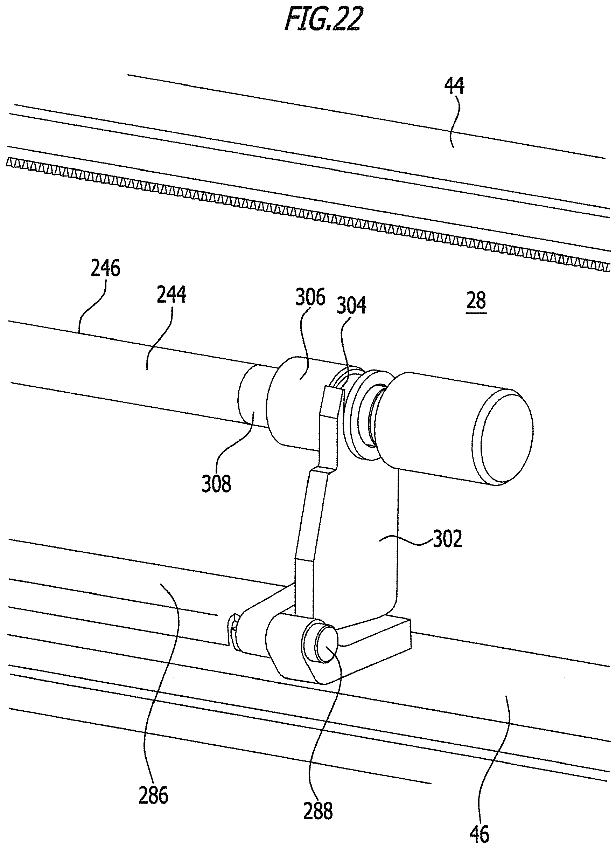

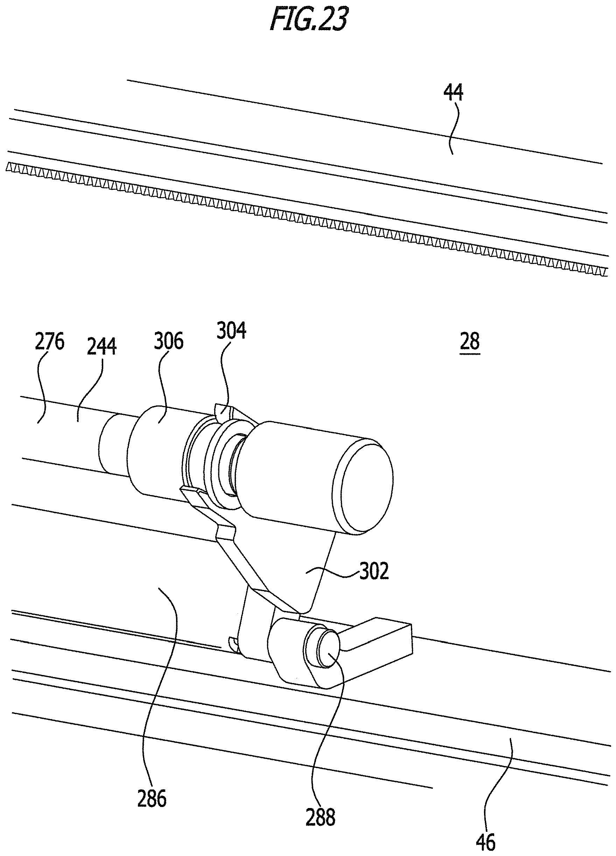

Dabei ist die Nachschubstange 244 beim Bewegen von der Aufbewahrposition 246 (Fig. 22) in die Nachschubposition 276 (Fig. 23), um die Schwenkachse 288 verschwenkbar, so dass in der in Fig. 23 dargestellten Nachschubposition 276 nach wie vor eine Führung der Nachschubstange 244 durch die Führungsbüchse 306 erfolgt, die in der Gabel 304 des Haltearms 302 aufgenommen ist.

Das permanente Führen der Nachschubstange 244 durch die Führungsbüchse 306 des Haltearms 302 ersetzt eine Führung der Nachschubstange durch die Nachschubstangenführungselemente 52, so dass der Satz 50 der Nachschubstangenführungselemente 52 zur Führung der Nachschubstange 244 nicht bewegt werden muss.

Der um die Schwenkachse 288 verschwenkbare Haltearm 302 ist über die Schwenkantriebseinheit 292 antreibbar.

Wenn die Nachschubstange 244 in der Nachschubposition 276 steht, lässt sich diese durch Verfahren des Materialstangenvorschubelements 112 längs der Ausrichtachse 30 in Richtung der Werkzeugmaschine 20 verschieben, wobei der Arm 284 von der Schwenkeinheit 286 dadurch lösbar ist, dass eine in einer zur Schwenkachse 288 senkrechten Ebene wirksame formschlüssige Verbindung 312 zwischen dem Arm 284 und der Schwenkeinheit 286 in der Nachschubstangenübergabeposition des Materialstangenvorschubelements 112 besteht, die durch Verfahren des Materialstangenvorschubelements 112 in Richtung der Werkzeugmaschine 20 lösbar ist und durch Verfahren des Materialstangenvorschubelements 112 in die Nachschubstangenübergabeposition wieder herstellbar ist.

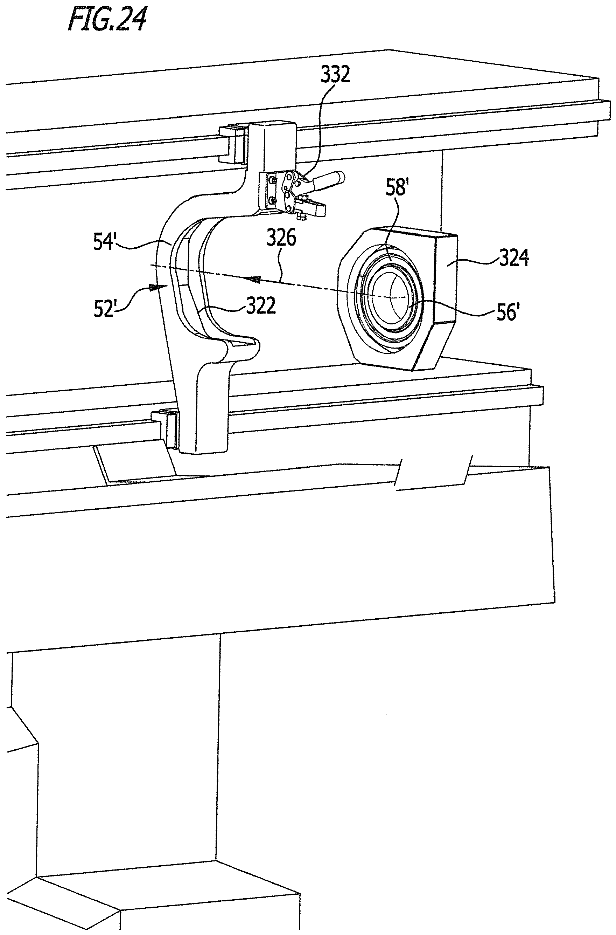

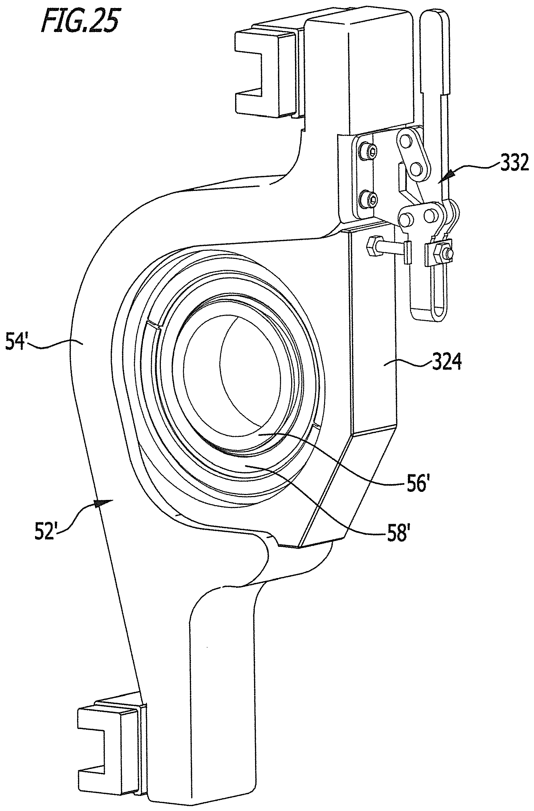

Bei einer Variante eines erfindungsgemäßen Materialstangenlademagazins, dargestellt in Fig. 24 und Fig. 25, sind die Materialstangenführungselemente 52' so ausgebildet, dass deren Zentralkörper 54' eine zu dem Zugangsbereich Z des Materialstangenlademagazins hin offene Aufnahme 322 bildet, in welche ein Einsatz 324 durch Bewegen desselben in einer quer zur Ausrichtachse 30 verlaufenden Einsatzrichtung 326 einsetzbar ist.

In dem Einsatz 324 sind dabei die Lageraufnahme 56' zur Aufnahme der Materialstange 32 koaxial zur Drehachse 30 sowie das die Lageraufnahme 56' drehbar relativ zum Einsatz 324 lagernde Drehlager 58' aufgenommen.

Dabei ist der Einsatz 324 so ausgebildet, dass dieser durch Einsetzen in die Aufnahme 322 des Zentralkörpers 54' die Lageraufnahme 56' koaxial zur Ausrichtachse 30 des Materialstangenlademagazins positioniert.

Insbesondere ist dabei die Aufnahme 322 so ausgebildet, dass diese einen Passsitz für den Einsatz 324 aufweist, welcher vorzugsweise durch eine Spanneinheit 332 in seiner in die Aufnahme 322 eingesetzten Stellung beaufschlagbar ist, wobei der Einsatz 324 dadurch durch die Aufnahme 322 mit der Lageraufnahme 56' exakt koaxial zur Ausrichtachse 30 positioniert ist.

Durch Lösen der Spanneinheit 332 lässt sich in einfacher Weise der Einsatz 324 mit der Lageraufnahme 56' für die Materialstange 32 und dem Drehlager 58' auswechseln und beispielsweise ein anderer Einsatz 324 mit einer Lageraufnahme 56' eines anderen Durchmessers einsetzen, so dass durch das Wechseln des Einsatzes 324 mitsamt dem Drehlager 58' und der Lageraufnahme 56' eine Anpassung der Lageraufnahmen 56' der Materialstangenführungselemente 52' an unterschiedliche Durchmesser der Materialstange 32 möglich ist.

Durch Einsetzen der Einsätze 324 mit einem an die jeweilige Materialstange 32W angepassten Durchmesser besteht insbesondere die Möglichkeit das erfindungsgemäße Materialstangenlademagazin in einfacher Weise für verschiedene Durchmesser von Materialstangen 32 umzurüsten, wobei jeweils für alle Materialstangenführungselemente 52 entsprechende Einsätze 324 mit Lageraufnahmen 56' für die jeweiligen Durchmesser der Materialstange 32 vorzuhalten sind.

## Patentansprüche

1. Materialstangenlademagazin für Werkzeugmaschinen (20), umfassend eine sich in einer Längsrichtung (12) erstreckende Führungsbasis (10), einen Satz (50) von an der Führungsbasis (10) in der Längsrichtung (12) verschiebbar geführten Materialstangeführungselementen (52), von denen jedes eine koaxial zu einer zur Längsrichtung (12) parallelen Ausrichtachse (30) angeordnete Lageraufnahme (56) für eine in einer Zufuhrposition (60) um die Ausrichtachse (30) drehbare Materialstange (32) aufweist, wobei der Satz (50) von Materialstangenführungselementen (52) in mindestens eine Materialstangenführungsstellung bringbar ist, in welcher die Lageraufnahmen (56) der Materialstangenführungselemente (52) die in der Zufuhrposition (60) angeordnete Materialstange (32) in der Längsrichtung (12) jeweils mit Abstand voneinander und zentriert zur Ausrichtachse (30) führen, ein an der Führungsbasis (10) geführtes Materialstangenvorschubelement (112) mit einer Aufnahme (116) für eine in der Zufuhrposition (60) stehende Materialstange (32), mit welchem die Materialstange (32) in der Zufuhrposition (60) in Richtung der Ausrichtachse (30) gesteuert verschiebbar und dadurch der Werkzeugmaschine (20) zu einer Bearbeitung zuführbar ist, wobei der Satz von Materialstangenführungselementen (52) und das Materialstangenvorschubelement (112) in eine Materialstangenbeladestellung verfahrbar sind, in welcher die Materialstange (32) in eine zur Ausrichtachse (30) koaxiale Einführausgangsposition (210) bringbar ist, von welcher ausgehend die Materialstange (32) in die Lageraufnahmen (56) des Satzes (50) der Materialstangenführungselemente (52) einführbar ist, und wobei die Führungsbasis (10) in einem auf einer ersten Seite einer durch die Ausrichtachse (30) verlaufenden vertikalen Längsmittelebene (34) liegenden Raumbereich angeordnet ist, und dass ein Zugangsbereich (Z) zu dem Materialstangenlademagazin in einem auf einer zweiten, der Führungsbasis (10) abgewandten Seite der vertikalen Längsmittelebene (34) liegenden Raumbereich angeordnet ist, **dadurch gekennzeichnet, dass** die Führungsbasis (10) zwei zueinander parallele und im Abstand voneinander verlaufende Führungsbahnen (22, 24) aufweist, an denen der Satz (50) von Materialstangenführungselementen (52) sowie das Materialstangenvorschubelement (112) geführt sind, und dass sich die Materialstangenführungselemente (52) und das Materialstangenvorschubelement (112) zwischen den Führungsbahnen (22, 24) erstrecken.

2. Materialstangenlademagazin nach Anspruch 1, **dadurch gekennzeichnet, dass** die Führungsbasis (10) eine erste Führungsbahn (22) und eine zweite Führungsbahn (24) sowie einen sich zwischen den Führungsbahnen (22, 24) erstreckenden Trägerkörper (26) aufweist und dass insbesondere der Trägerkörper (26) einen die Führungsbahnen (22, 24) tragenden und auf einer einem Zugangsbereich (Z) des Materialstangenlademagazins abgewandten Seite einer durch die Ausrichtachse (30) verlaufenden vertikalen Längsmittelebene (34) angeordneten Basiskörper (42) aufweist.

3. Materialstangenlademagazin nach einem der Ansprüche 1 oder 2, **dadurch gekennzeichnet, dass** die erste Führungsbahn (22) in einem auf einer ersten Seite der vertikalen Längsmittelebene (34) liegenden Raumbereich verläuft.

4. Materialstangenlademagazin nach einem der Ansprüche 1 bis 3, **dadurch gekennzeichnet, dass** die zweite Führungsbahn (24) in dem auf der ersten Seite der vertikalen Längsmittelebene (34) liegenden Raumbereich verläuft.

5. Materialstangenlademagazin nach einem der voranstehenden Ansprüche, **dadurch gekennzeichnet, dass** der auf der ersten Seite der vertikalen Längsmittelebene (34) liegende Raumbereich auf einer einer Zugangsseite (Z) des Materialstangenlademagazins abgewandten Seite der durch die Ausrichtachse (30) verlaufenden vertikalen Längsmittelebene (34) liegt.

6. Materialstangenlademagazin nach einem der Ansprüche 1 bis 5, **dadurch gekennzeichnet, dass** die erste Führungsbahn (22) in einem auf einer ersten Seite der horizontalen Längsmittelebene (36) liegenden Raumbereich angeordnet ist und dass insbesondere die zweite Führungsbahn (24) in einem auf einer zweiten Seite der horizontalen Längsmittelebene (36) liegenden Raumbereich angeordnet ist.

7. Materialstangelademagazin nach einem der voranstehenden Ansprüche, **dadurch gekennzeichnet, dass** jedes der Materialstangenführungselemente (52) einen die Lageraufnahme (56) umfassenden Zentralkörper (54) und einen zur ersten Führung (22) verlaufenden ersten Führungsarm (62) sowie einen zu der zweiten Führung (24) verlaufenden zweiten Führungsarm (64) aufweist.

8. Materialstangenlademagazin nach einem der voranstehenden Ansprüche, **dadurch gekennzeichnet, dass** das Materialstangenvorschubelement (112) einen Zentralkörper (114) und einen zu der ersten Führung (22) verlaufenden ersten Führungsarm (122) sowie einen zu der zweiten Führung (24) verlaufenden zweiten Führungsarm (126) aufweist.

9. Materialstangenlademagazin nach einem der voranstehenden Ansprüche, **dadurch gekennzeichnet, dass** in der mindestens einen Materialstangenbeladestellung die in der Einführausgangsposition (210) angeordnete Materialstange (32) zwischen dem Satz (50) von Materialstangenführungselementen (52) und dem Materialstangenvorschubelement (112) angeordnet ist.

10. Materialstangenlademagazin nach einem der voranstehenden Ansprüche, **dadurch gekennzeichnet, dass** das Materialstangenlademagazin mit einer Nachschubstange (244) versehen ist, welche von einer Aufbewahrposition (246) in eine Nachschubposition (254) bringbar ist.

11. Materialstangenlademagazin nach Anspruch 10, **dadurch gekennzeichnet, dass** die Nachschubstange (244) in der Aufbewahrposition (246) in einem Innenraum (28) des Trägerkörpers (26) der Führungsbasis (10) angeordnet ist.

12. Materialstangenlademagazin nach Anspruch 10 oder 11, **dadurch gekennzeichnet, dass** die Nachschubstange (244) von der Aufbewahrposition (246) in die zur Ausrichtachse (30) koaxial angeordnete Nachschubposition (276) bewegbar ist und dass insbesondere ein hinteres Ende der Nachschubstange (244) durch die Aufnahme (116) des Materialstangenvorschubelements (112) beaufschlagbar und mittels des Materialstangenvorschubelements (112) in Richtung der Werkzeugmaschine (20) positionsgesteuert verschiebbar ist.

13. Materialstangenlademagazin nach einem der voranstehenden Ansprüche, **dadurch gekennzeichnet, dass** die Nachschubstange (244) in einer Nachschubstangenaufnahme (242) gehalten ist und durch eine Bewegungseinheit (286) zwischen der Aufbewahrposition (246) und der Nachschubposition (276) hin- und her bewegbar ist und dass insbesondere die Bewegungseinheit (286) an der Führungsbasis (10) gehalten ist.

14. Materialstangenlademagazin nach Anspruch 13, **dadurch gekennzeichnet, dass** die Bewegungseinheit (286) eine Führungsaufnahme (310) für eine der Werkzeugmaschine (20) zugewandte Seite der Nachschubstange (244) aufweist und dass insbesondere die Führungsaufnahme (310) die Nachschubstange (244) sowohl in der Aufbewahrposition als auch in der Nachschubposition führt und positioniert hält.

## Claims

1. Bar feeder magazine for machine tools (20), comprising a guide base (10) extending in a longitudinal direction (12), a set (50) of bar guiding elements (52) guided on the guide base (10) for displacement in the longitudinal direction (12), each of said guiding elements having a bearing receptacle (56) for a bar of material (32) rotatable about an axis of alignment (30) in a supply position (60), said receptacle being arranged coaxially to the axis of alignment (30) parallel to the longitudinal direction (12), wherein the set (50) of bar guiding elements (52) is able to be brought into at least one bar guiding position, the bearing receptacles (56) of the bar guiding elements (52), in said bar guiding position, guiding the bars of material (32) arranged in the supply position (60) in the longitudinal direction (12) at a distance from one another and centred relative to the axis of alignment (30), a bar advancing element (112) guided on the guide base (10) and having a receptacle (116) for a bar of material (32) located in the supply position (60), the bar of material (32) in the supply position (60) being movable with said advancing element in the direction of the axis of alignment (30) in a controlled manner and, as a result, being suppliable to the machine tool (20) for machining, wherein the set of bar guiding elements (52) and the bar advancing element (112) are movable into a bar loading position, the bar of material (32) able to be brought into an insertion starting position (210) coaxial to the axis of alignment (30) in said loading position, the bar of material (32) being insertable into the bearing receptacles (56) of the set (50) of bar guiding elements (52) proceeding from said starting position, and wherein the guide base (10) is arranged in a spatial area located on a first side of a vertical longitudinal central plane (34) extending through the axis of alignment (30) and wherein an access area (Z) to the bar feeder magazine is arranged in a spatial area located on a second side of the vertical longitudinal central plane (34) facing away from the guide base (10), **characterized in that** the guide base (10) has two tracks (22, 24) parallel to one another and extending at a distance from one another, the set (50) of bar guiding elements (52) as well as the bar advancing element (112) being guided on said tracks, and that the bar guiding elements (52) and the bar advancing element (112) extend between the tracks (22, 24).

2. Bar feeder magazine as defined in claim 1, **characterized in that** the guide base (10) has a first track (22) and a second track (24) as well as a bearing member (26) extending between the tracks (22, 24) and that the bearing member (26), in particular, has a base member (42) bearing the tracks (22, 24) and being arranged on one side of a vertical longitudinal central plane (34) extending through the axis of alignment (30), said side facing away from an access area (Z) of the bar feeder magazine.

3. Bar feeder magazine as defined in either one of claims 1 or 2, **characterized in that** the first track (22) extends in a spatial area located on a first side of the vertical longitudinal central plane (34).

4. Bar feeder magazine as defined in any one of claims 1 to 3, **characterized in that** the second track (24) extends in the spatial area located on the first side of the vertical longitudinal central plane (34).

5. Bar feeder magazine as defined in any of the preceding claims, **characterized in that** the spatial area located on the first side of the vertical longitudinal central plane (34) is located on a side of the vertical longitudinal central plane (34) extending through the axis of alignment (30), said side facing away from an access side (Z) of the bar feeder magazine.

6. Bar feeder magazine as defined in any one of claims 1 to 5, **characterized in that** the first track (22) is arranged in a spatial area located on a first side of the horizontal longitudinal central plane (36) and that the second track (24), in particular, is arranged in a spatial area located on a second side of the horizontal longitudinal central plane (36).

7. Bar feeder magazine as defined in any one of the preceding claims, **characterized in that** each of the bar guiding elements (52) has a central member (54) including the bearing receptacle (56) and a first guiding arm (62) extending relative to the first track (22) as well as a second guiding arm (64) extending relative to the second track (24).

8. Bar feeder magazine as defined in any one of the preceding claims, **characterized in that** the bar advancing element (112) has a central member (114) and a first guiding arm (122) extending relative to the first track (22) as well as a second guiding arm (126) extending relative to the second track (24).

9. Bar feeder magazine as defined in any one of the preceding claims, **characterized in that** in the at least one bar loading position the bar of material (32) arranged in the insertion starting position (210) is arranged between the set (50) of bar guiding elements (52) and the bar advancing element (112).

10. Bar feeder magazine as defined in any one of the preceding claims, **characterized in that** the bar feeder magazine is provided with a replenishment bar (244) able to be brought from a storage position (246) into a replenishment position (254).

11. Bar feeder magazine as defined in claim 10, **characterized in that** in the storage position (246) the replenishment bar (244) is arranged in an inner area (28) of the bearing member (26) of the guide base (10).

12. Bar feeder magazine as defined in claim 10 or 11, **characterized in that** the replenishment bar (244) is movable from the storage position (246) into the replenishment position (276) arranged coaxially to the axis of alignment (30) and that a rear end of the replenishment bar (244), in particular, is acted upon by the receptacle (116) of the bar advancing element (112) and is displaceable by the bar advancing element (112) in the direction of the machine tool (20) in a position-controlled manner.

13. Bar feeder magazine as defined in any one of the preceding claims, **characterized in that** the replenishment bar (244) is held in a replenishment bar receptacle (242) and movable back and forth between the storage position (246) and the replenishment position (276) by a moving unit (286) and that the moving unit (286), in particular, is held on the guide base (10).

14. Bar feeder magazine as defined in claim 13, **characterized in that** the moving unit (286) has a guide receptacle (310) for a side of the replenishment bar (244) facing the machine tool (20) and that the guide receptacle (310), in particular, guides the replenishment bar (244) both in the storage position and in the replenishment position and keeps it in position.

## Revendications

1. Magasin de chargement de barres pour machines-outils (20), comprenant une base de guidage (10), s'étendant dans un sens longitudinal (12), un kit (50) d'éléments de guidage de barres (52) guidé de manière mobile en translation dans le sens longitudinal (12) au niveau de la base de guidage (10), éléments dont chacun présente un logement de palier (56), disposé coaxialement à un axe d'alignement (30) parallèle au sens longitudinal (12), pour une barre (32) pouvant tourner autour de l'axe d'alignement (30) dans une position d'alimentation (60), le kit (50) d'éléments de guidage de barres (52) pouvant être amené dans au moins une position de guidage des barres dans laquelle les logements de palier (56) des éléments de guidage de barres (52) guident la barre (32), disposée en position d'alimentation (60), dans le sens longitudinal (12) à distance l'un de l'autre et centrés par rapport à l'axe d'alignement (30), un avance-barre (112), guidée au niveau de la base de guidage (10), comportant un logement (116) pour une barre (32) se trouvant en position d'alimentation (60), avec lequel la barre (32) peut être déplacée de manière asservie en position d'alimentation (60) en direction de l'axe d'alignement (30) et ainsi acheminée vers la machine-outil (20) pour être usinée,
dans lequel le kit d'éléments de guidage de barres (52) et l'avance-barre (112) peuvent être déplacés dans une position de chargement de barres dans laquelle la barre (32) peut être amenée dans une position initiale d'introduction (210), coaxiale à l'axe d'alignement (30), depuis laquelle la barre (32) peut être introduite dans les logements de palier (56) du kit (50) d'élément de guidage de barres (52),
et dans lequel la base de guidage (10) est disposée dans un espace situé sur un premier côté d'un plan médian longitudinal (34) vertical passant par l'axe d'alignement (30) et une zone d'accès (Z) au magasin de chargement de barres dans un espace situé sur un deuxième côté, opposé à la base de guidage (10) du plan médian longitudinal (34) vertical,
**caractérisé en ce que** la base de guidage (10) présente deux voies de guidage (22, 24) parallèles entre elles et à distance l'une de l'autre, au niveau desquelles le kit (50) d'éléments de guidage de barres (52) ainsi que l'avance-barre (112) sont guidés et **en ce que** les éléments de guidage de barres (52) et l'avance-barre (112) s'étendent entre les voies de guidage (22, 24).

2. Magasin de chargement de barres selon la revendication 1, **caractérisé en ce que** la base de guidage (10) présente une première voie de guidage (22) et une deuxième voie de guidage (24) ainsi qu'un corps de support (26) s'étendant entre les voies de guidage (22, 24) et **en ce qu'**en particulier, le corps de support (26) présente un corps de base (42) disposé sur un côté, opposé à une zone d'accès (Z) du magasin de chargement de barres, d'un plan médian longitudinal (34) vertical passant par l'axe d'alignement (30).

3. Magasin de chargement de barres selon l'une quelconque des revendications 1 ou 2, **caractérisé en ce que** la première voie de guidage (22) passe dans un espace situé sur un premier côté du plan médian longitudinal (34) vertical.

4. Magasin de chargement de barres selon l'une quelconque des revendications 1 à 3, **caractérisé en ce que** la deuxième voie de guidage (24) passe dans l'espace situé sur le premier côté du plan médian longitudinal (34) vertical.

5. Magasin de chargement de barres selon l'une quelconque des revendications précédentes, **caractérisé en ce que** l'espace, situé sur le premier côté du plan médian longitudinal (34) vertical, se trouve sur un côté, opposé à un côté d'accès (Z) du magasin de chargement de barres du plan médian longitudinal (34) vertical passant par l'axe d'alignement (30).

6. Magasin de chargement de barres selon l'une quelconque des revendications 1 à 5, **caractérisé en ce que** la première voie de guidage (22) est disposée dans un espace situé sur un premier côté du plan médian longitudinal (36) horizontal et **en ce qu'**en particulier la deuxième voie de guidage (24) est disposée dans un espace situé sur un deuxième côté du plan médian longitudinal (36) horizontal.

7. Magasin de chargement de barres selon l'une quelconque des revendications précédentes, **caractérisé en ce que** chacun des éléments de guidage de barres (52) présente un corps central (54) comprenant un logement de palier (56) et un premier bras de guidage (62) allant jusqu'au premier guidage (22) ainsi qu'un deuxième bras de guidage (64) allant jusqu'au deuxième guidage (24).

8. Magasin de chargement de barres selon l'une quelconque des revendications précédentes, **caractérisé en ce que** l'avance-barre (112) présente un corps central (114) et un premier arbre de guidage (122) allant vers le premier guidage (22) ainsi qu'un deuxième arbre de guidage (126) allant vers le deuxième guidage (24).

9. Magasin de chargement de barres selon l'une quelconque des revendications précédentes, **caractérisé en ce que**, dans l'au moins une position de chargement de barres, la barre (32), disposée en position initiale d'introduction (210), est disposée entre le kit (50) d'éléments de guidage de barres (52) et l'avance-barre (112).

10. Magasin de chargement de barres selon l'une quelconque des revendications précédentes, **caractérisé en ce que** le magasin de chargement de barres est doté d'une barre de ravitaillement (244) qui peut être amenée d'une position de conservation (246) dans une position de ravitaillement (254).

11. Magasin de chargement de barres selon la revendication 10, **caractérisé en ce que** la barre de ravitaillement (244) est disposée en position de conservation (246) dans un espace intérieur (28) du corps de support (26) de la base de guidage (10).

12. Magasin de chargement de barres selon l'une quelconque des revendications 10 ou 11, **caractérisé en ce que** la barre de ravitaillement (244) peut être déplacée de la position de conservation (246) en position de ravitaillement (276) disposée coaxialement à l'axe d'alignement (30) et **en ce qu'**en particulier une extrémité postérieure de la barre de ravitaillement (244) peut être sollicitée par le logement (116) de l'avance-barre (112) et déplacée asservie en position en direction de la machine-outil (20) au moyen d'un avance-barre (112).

13. Magasin de chargement de barres selon l'une quelconque des revendications précédentes, **caractérisé en ce que** la barre de ravitaillement (244) est maintenue dans un logement pour barres de ravitaillement (242) et peut être déplacée dans un sens et dans l'autre entre la position de conservation (246) et la position de ravitaillement (276) par une unité de déplacement (286) et **en ce qu'**en particulier l'unité de déplacement (286) est maintenue au niveau de la base de guidage (10).

14. Magasin de chargement de barres selon la revendication 13, **caractérisé en ce que** l'unité de déplacement (286) présente un logement de guidage (310) pour un côté de la barre de ravitaillement (244) dirigé vers la machine-outil (20) et **en ce qu'**en particulier le logement de guidage (310) guide et maintient la barre de ravitaillement (244) aussi bien dans la position de conservation que dans la position de ravitaillement.
